# EUROPEAN PATENT APPLICATION

(11) **EP 4 712 664 A1**
(43) Date of publication of application: **18.03.2026**
(21) Application number: 24803774.9
(22) Date of filing: 10.05.2024
(51) Int. Cl.: H04W 72/541, H04W 72/50, H04W 72/0453, H04W 52/02, H04W 74/04, H04W 84/12

(54) **METHOD AND APPARATUS FOR PERFORMING COMMUNICATION BASED ON TARGET WAKE TIME IN WIRELESS LAN SYSTEM**

(30) Priority: 10.05.2023 KR 20230060631; 12.05.2023 KR 20230061862; 25.05.2023 KR 20230067714; 09.06.2023 KR 20230074364; 14.02.2024 KR 20240021280; 04.04.2024 KR 20240046208
(71) Applicant: LG Electronics Inc., Yeongdeungpo-gu Seoul 07336 (KR)
(72) Inventor: BAEK, Sunhee, Seoul 06772 (KR); CHOI, Jinsoo, Seoul 06772 (KR); JANG, Insun, Seoul 06772 (KR); KIM, Geonhwan, Seoul 06772 (KR); YOON, Yelin, Seoul 06772 (KR)
(74) Representative: Plasseraud IP
(86) International application number: PCT/KR2024/006361
(87) International publication number: WO 2024/232721

(57) **Abstract**

Disclosed are a method and apparatus for operating in a wireless LAN system. The method pelformed by an STA in e wireless LAN system, according to an embodiment of the present disclosure, comprises the steps of: receiving, from a first access int (AP), a first frame including a field of a first broadcast target wake time (TWT) parameter set and a field of a second broadcast WT parameter set; and decoding the first frame, wherein first information related to a first restricted TWT (R-TWT) service period SP) scheduled by the first AP and a first broadcast TWT identifier (ID) may be included in the first broadcast TWT parameter set, and second information related to a second R-TWT SP scheduled by a second AP and a second TWT ID may be included in the second broadcast TWT parameter set.

## Description

### [TECHNICAL FIELD]

The present disclosure relates to a communication operation in a wireless local area network (WLAN) system, and more particularly, to a method and device for performing target wake time (TWT)-based communication in a next-generation wireless LAN system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

The technical problem of the present disclosure is to provide a method and device for performing TWT-based communication in a wireless LAN system.

The technical problem of the present disclosure is to provide a method and device for performing an operation for an R(restricted)-TWT service period (SP) scheduled by a neighboring AP in a multi-BSS (basic service set) environment.

The technical objects to be achieved by the present disclosure are not limited to the above-described technical objects, and other technical objects which are not described herein will be clearly understood by those skilled in the pertinent art from the following description.

### [Technical Solution]

According to one embodiment of the present disclosure, a method performed by a station (STA) in a wireless LAN system may include receiving a first frame including a first broadcast target wake time (TWT) parameter set field and a second broadcast TWT parameter set field from a first access point (AP); and decoding the first frame, and first information and a first broadcast TWT identifier (ID) related to a first restricted TWT (R-TWT) service period (SP) scheduled by the first AP may be included in the first broadcast TWT parameter set, and second information and a second TWT ID related to a second R-TWT SP scheduled by the second AP may be included in the second broadcast TWT parameter set.

According to one embodiment of the present disclosure, a method performed by a first access point (AP) in a wireless LAN system may include receiving second information related to a second restricted target wake time (R-TWT) service period (SP) from a second AP; and transmitting a first beacon frame including first information related to a first R-TWT SP and the second information to a first station (STA), and the first beacon frame may include a first broadcast TWT parameter set field and a second broadcast TWT parameter set field, the first broadcast TWT parameter set field may include the first information and a first broadcast TWT ID, and the second broadcast TWT parameter set field may include the second information and a second broadcast TWT ID.

### [Technical Effects]

According to various embodiments of the present disclosure, a method and device for performing TWT-based communication in a wireless LAN system may be provided.

According to various embodiments of the present disclosure, a method and device for performing an operation for an R-TWT SP scheduled by a neighboring AP in a multi-BSS environment may be provided.

According to various embodiments of the present disclosure, a method and device for protecting an OBSS (overlapping basic service set) R-TWT SP announced by an AP may be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram illustrating an example of an individual TWT operation to which the present disclosure may be applied.
FIG. 9 is a diagram illustrating an example of a broadcast TWT operation to which the present disclosure may be applied.
FIG. 10 is a diagram illustrating an example of a TWT information element format.
FIG. 11 is a diagram illustrating examples of an individual TWT parameter set field format.
FIG. 12 is a diagram illustrating examples of a broadcast TWT parameter set field format.
FIG. 13 is a diagram illustrating examples of field formats related to a limited TWT operation.
FIG. 14 is a diagram illustrating a method for an STA to perform an overhearing operation in a multi-BSS environment, according to an embodiment of the present disclosure.
FIG. 15 is a flowchart illustrating the operation of an STA according to an embodiment of the present disclosure.
FIG. 16 is a diagram illustrating the operation of a first AP according to an embodiment of the present disclosure.
FIG. 17 is a diagram illustrating the operation of an STA protecting an OBSS R-TWT SP according to an embodiment of the present disclosure.
FIG. 18 is a diagram illustrating the configuration of a field including information related to an OBSS R-TWT according to an embodiment of the present disclosure.
FIG. 19 is a diagram illustrating the operation of an AP for announcing an OBSS R-TWT SP according to an embodiment of the present disclosure.
FIG. 20 is a diagram illustrating the operation of an AP for announcing an overlapping quiet interval according to an embodiment of the present disclosure.
FIG. 21 is a diagram for describing an R-TWT SP announcement method of an AP for each STA type according to an embodiment of the present disclosure.
FIG. 22 is a diagram for describing a TB PPDU transmission and reception procedure between a transmitting STA and a receiving STA according to an example of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

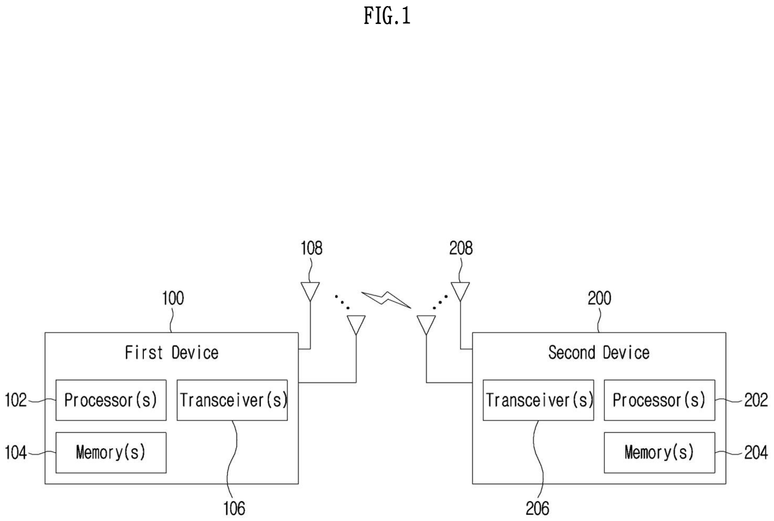

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

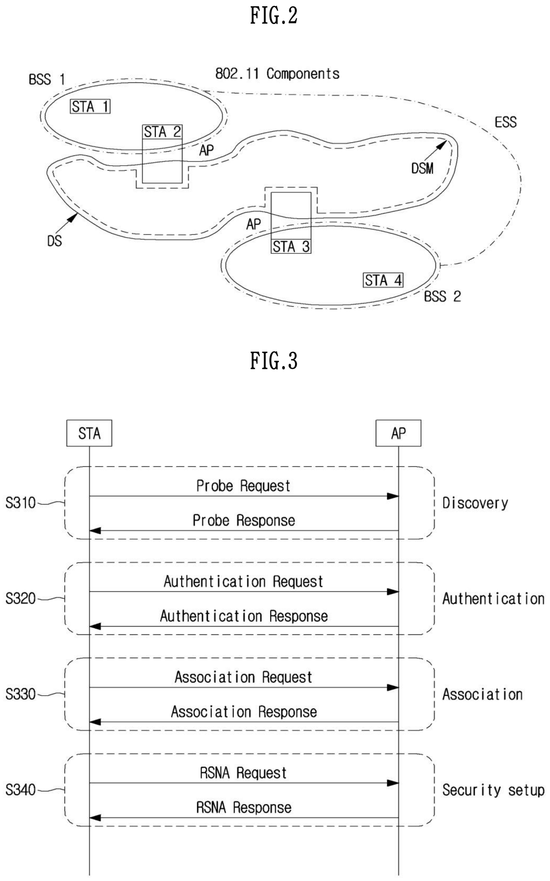

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

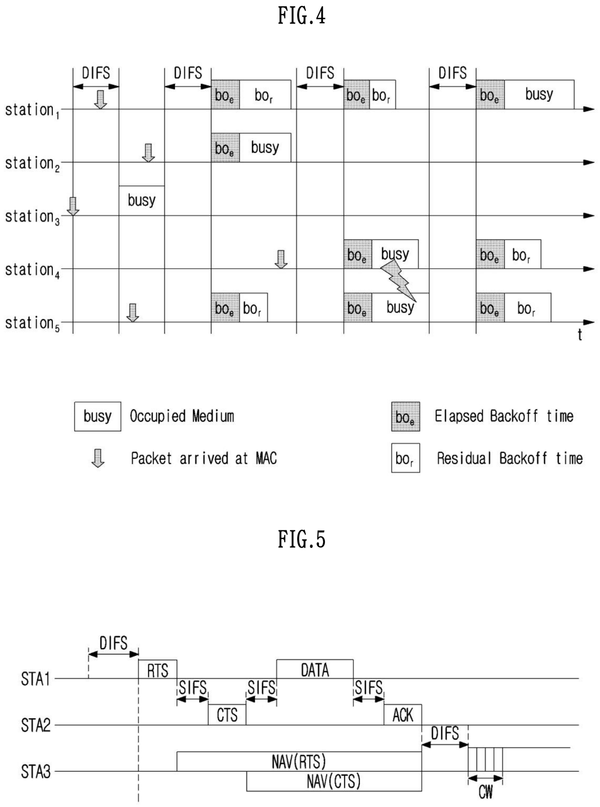

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

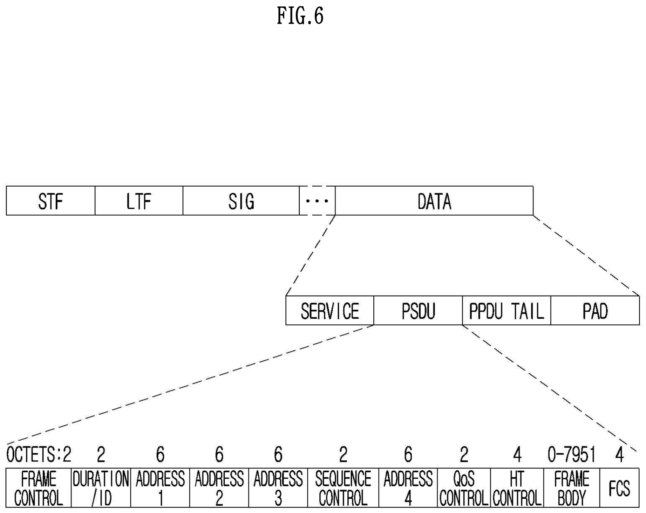

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

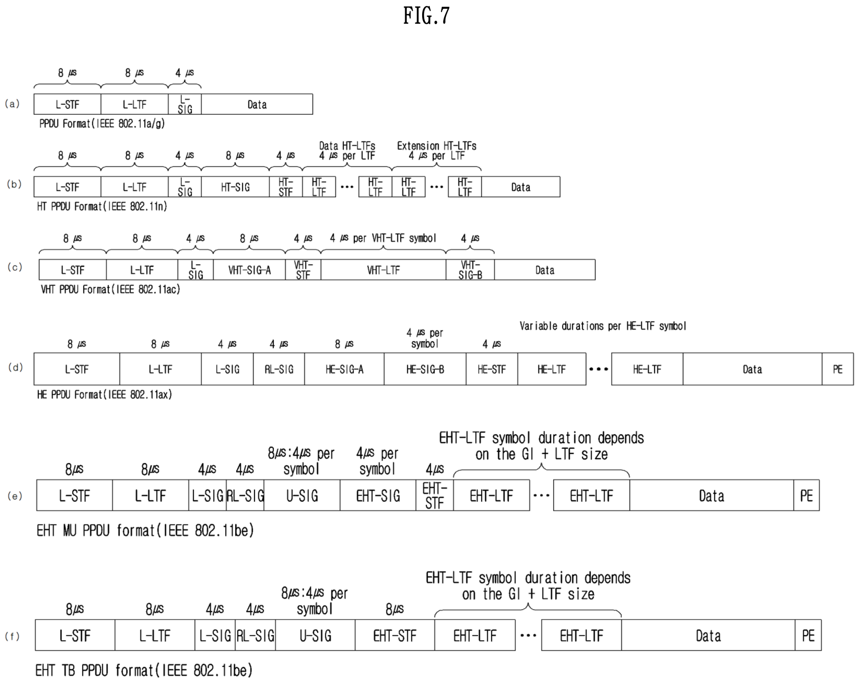

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.1 1n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Target wake time (TWT)

TWT is a PS (Power Saving) technology that can improve the energy efficiency of non-AP STAs by defining the service period (SP) between AP and non-AP STAs and sharing information about SPs to reduce medium contention.

An STA that performs a request/suggest/demand, etc. in the TWT setup stage may be referred to as a TWT requesting STA. Additionally, the AP that responds, such as Accept/Reject, to the request may be referred to as a TWT responding STA.

The setup step may include the process of determining/defining the STA's TWT request to the AP, the type of TWT operation performed, and the type of frame to be transmitted and received. TWT operation can be divided into individual TWT and broadcast TWT.

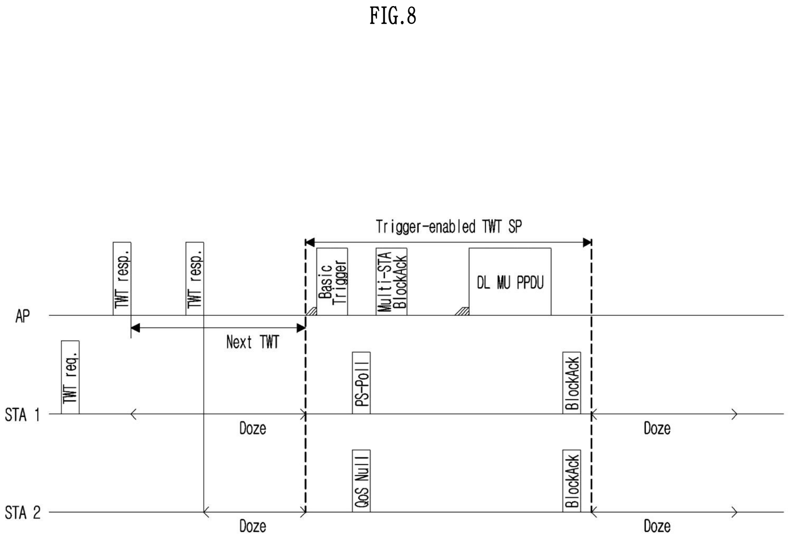

FIG. 8 is a diagram for describing an example of an individual TWT operation to which the present disclosure may be applied.

Individual TWT is a mechanism in which an AP and a non-AP STA negotiate the awake/doze state of the non-AP STA through transmission and reception of TWT request/response frames, and then exchange data.

In the example of FIG. 8, AP and STA 1 may form a trigger-enabled TWT agreement through a TWT request frame and a TWT response frame.

Here, the method used by STA 1 is a solicited TWT method. When STA 1 transmits a TWT request frame to the AP, STA 1 receives information for TWT operation from the AP through a TWT response frame.

On the other hand, STA2, which performs the unsolicited TWT method, may receive information about trigger-enabled TWT agreement configurations from the AP through an unsolicited TWT response.

Specifically, STA 2 may calculate the next TWT by adding a specific number from the current TWT value. During a trigger-enabled TWT SP, the AP may transmit a trigger frame to STAs. The trigger frame may inform STAs that the AP has buffered data. In response to this, STA 1 may inform the AP of its awake state by transmitting a PS-Poll frame. Additionally, STA 2 may notify the AP of its awake state by transmitting a QoS Null frame. Here, the data frames transmitted by STA 1 and STA 2 may be frames in TB PPDU format. The AP that has confirmed the state of STA 1 and STA 2 may transmit a DL MU PPDU to the awake STAs. When the corresponding TWT SP expires, STA 1 and STA 2 may switch to the doze state.

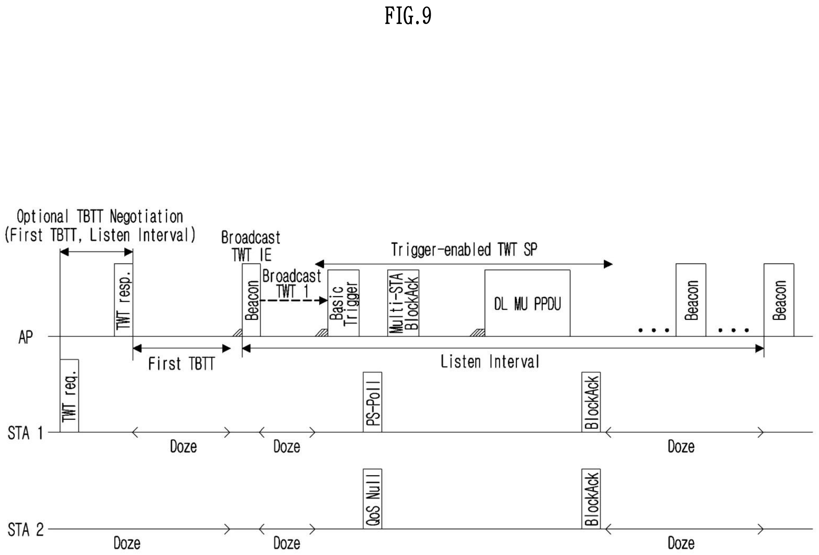

FIG. 9 is a diagram for describing an example of a broadcast TWT operation to which the present disclosure may be applied.

Broadcast TWT is a type of TWT in which a non-AP STA (or TWT scheduling STA) acquires information about target beacon transmission time (TBTT) and listening interval by transmitting and receiving TWT request/response frames with the AP (or TWT scheduled STA). Here, a negotiation operation for TBTT may be performed. Based on this, the AP may define a frame that will contain TWT scheduling information through a beacon frame.

In FIG. 9, STA 1 performs a solicited TWT operation, and STA 2 performs an unsolicited TWT operation. The AP may transmit the DL MU PPDU after checking the awake state of the STAs through the trigger transmitted by the AP. This may be the same as the process for individual TWT. In broadcast TWT, the trigger-enabled TWT SP, including the beacon frame, may be repeated several times at regular intervals.

Transmission of TWT information may be accomplished through a TWT information frame and a TWT information element. The TWT information frame is transmitted by an STA to request or convey information about the TWT agreement, and is transmitted by one of the STAs in the existing TWT agreement. The action field of the TWT Information frame includes a TWT information field.

The TWT Information field may include a 3-bit TWT flow identifier subfield, a 1-bit response requested subfield, a 1-bit next TWT request subfield, a 2-bit next TWT subfield size subfield, 1-bit all TWT subfield, and 0/32/48/64-bit next TWT subfield.

Here, the TWT flow identifier subfield may be used to identify the flow for which TWT information is requested/provided.

The Response Request subfield may indicate whether the transmitter of a frame including a TWT Information field requests transmission of a TWT Information frame (to be transmitted in response to reception of that frame). To request the receiver not to transmit a TWT Information frame in response to reception of the frame, the Response Request subfield value may be set to 0. To request the receiver to transmit a TWT Information frame in response to reception of the frame, the Response Request subfield value may be set to 1.

To indicate a request for transmission of a TWT information frame containing the following TWT field (where the length of the TWT information frame is not 0), the value of the Next TWT subfield may be set to 1. Otherwise, the value of the Next TWT subfield may be set to 0.

The Next TWT Subfield Size subfield may indicate the size of the next TWT subfield. When the size of the next TWT subfield is 0/32/48/64 bits, the value of the Next TWT Subfield Size subfield may be set to 0/1/2/3.

All TWT subfield values may be set to 1 by a HE STA, which may mean that the TWT information frame has re-aligned all TWTs. Otherwise, all TWT subfield values may be set to 0.

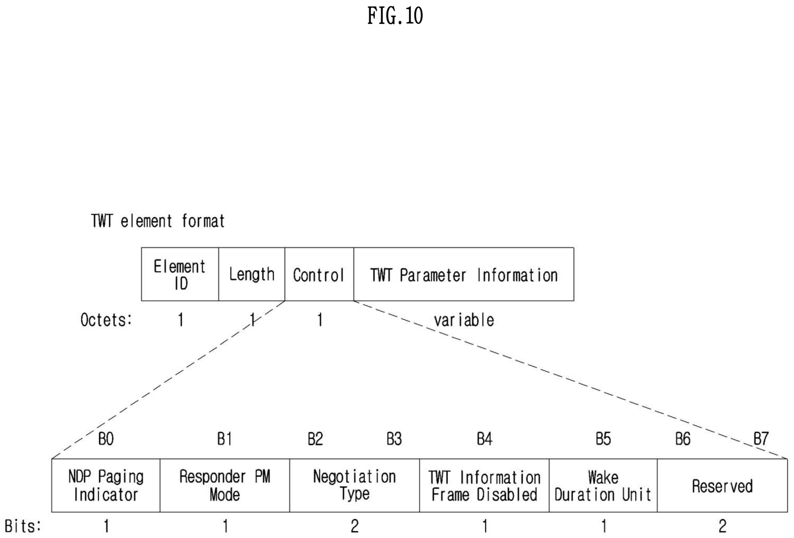

FIG. 10 is a diagram for describing an example of the TWT information element format.

TWT elements may be transmitted and received by being included in beacons, probe responses, (re)combined response frames, etc. The TWT element may include an element ID field, a length field, a control field, and a TWT parameter information field.

The control field of the TWT element has the same format regardless of individual TWT and broadcast TWT.

The NDP paging indication subfield may have a value of 1 if the NDP paging field exists, and may have a value of 0 if the NDP paging field does not exist.

The responder PM mode subfield may indicate a power management (PM) mode.

The negotiation type subfield may indicate whether the information included in the TWT element is about negotiation of parameters of broadcast TWT or individual TWT(s), or about wake TBTT interval.

For example, if the value of the negotiation type subfield is 0, the TWT subfield is for the future individual TWT SP start time, and the TWT element contains one individual TWT parameter set. This may correspond to individual TWT negotiation between the TWT requesting STA and the TWT responding STA, or to individual TWT announcement by the TWT responder.

For example, if the value of the negotiation type subfield is 1, the TWT subfield is for the next TBTT time, and the TWT element contains one individual TWT parameter set. This may correspond to wake TBTT and wake interval negotiation between a TWT scheduled STA and a TWT scheduled AP.

For example, if the value of the negotiation type subfield is 2, the TWT subfield is for the future broadcast TWT SP start time, and the TWT element includes one or more broadcast TWT parameter sets. This may correspond to providing a broadcast TWT schedule to the TWT scheduled STA by including a TWT element in the broadcast management frame transmitted by the TWT scheduling AP.

For example, if the value of the negotiation type subfield is 3, the TWT subfield is for the future broadcast TWT SP start time, and the TWT element includes one or more broadcast TWT parameter sets. This may correspond to managing membership in the broadcast TWT schedule by including a TWT element in an individually addressed management frame transmitted by either a TWT-scheduled STA or a TWT-scheduled AP.

If the TWT information frame disabled subfield is set to 1, it indicates that reception of the TWT information frame by the STA is disabled; otherwise, it may be set to 0.

The wake duration unit subfield indicates the unit of the nominal minimum TWT wake duration field. The wake duration unit subfield may be set to 0 when the unit is 256us, and may be set to 1 when the unit is TU. If it is not a HE/EHT STA, the wake duration unit subfield may be set to 0.

The most significant bit (MSB) of the negotiation type field may correspond to the broadcast field. If the broadcast field is 1, one or more broadcast TWT parameter sets may be included in the TWT element. If the broadcast field is 0, only one individual TWT parameter set can be included in the TWT element. A TWT element with the broadcast field set to 1 may be referred to as a broadcast TWT element.

Also, FIG. 10 shows a case where the reserved field consists of 2 bits, but this is only an example. For example, the TWT element may include a Link ID bitmap present field (e.g., 1 bit) and a reserved field (e.g., 1 bit).

For example, if the link ID bitmap presence field is set to 1, the link ID bitmap subfield is set to exist in the individual TWT parameter set field format to be described later, and if the link ID bitmap presence field is set to 0, the link ID bitmap subfield may be set not to exist in the individual TWT parameter set field format.

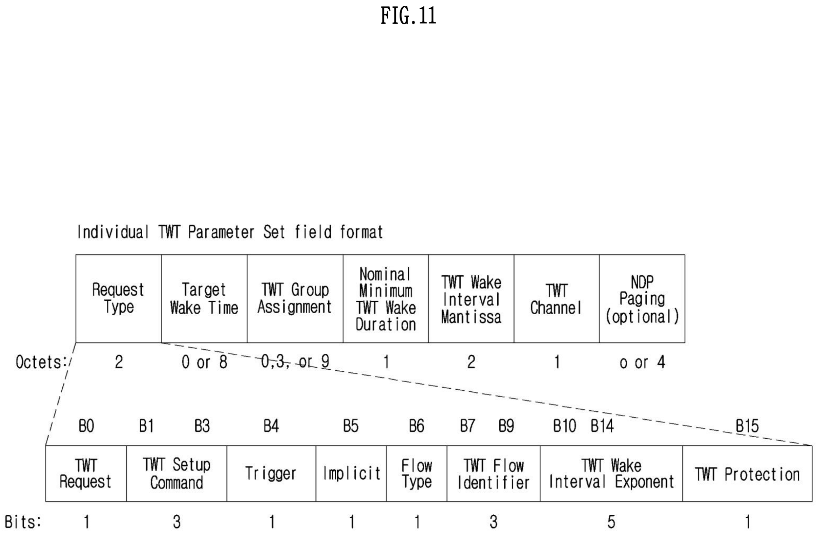

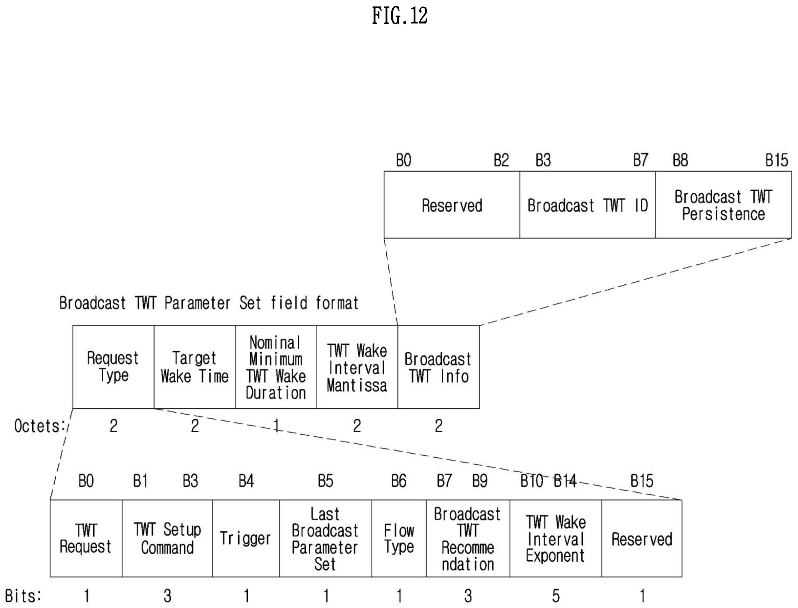

FIG. 11 is a diagram for describing examples of individual TWT parameter set field formats. FIG. 12 is a diagram for describing examples of the broadcast TWT parameter set field format.

The TWT parameter information field included in the TWT element of FIG. 10 may have a different configuration depending on individual TWT or broadcast TWT.

In the case of an individual TWT, the TWT parameter information field within the TWT element includes a single individual TWT parameter set field.

In the case of broadcast TWT, the TWT parameter information field in the TWT element includes one or more broadcast TWT parameter set fields. Each broadcast TWT parameter set may include specific information about one broadcast TWT.

As shown in FIGS. 11 and 12, the individual TWT parameter set field and the broadcast TWT parameter set field include common subfields.

The request type subfield has the same size in the individual TWT parameter set field and the broadcast TWT parameter set field, but the detailed configuration may be configured differently. This will be described later.

The target wake time subfield indicates the start time of the individual/broadcast TWT SP scheduled in the future.

The nominal maximum TWT wake duration subfield indicates the minimum unit that the TWT requesting STA is expected to wake up to complete the frame exchange associated with the TWT flow identifier during the TWT wake interval duration. Here, the TWT wake interval may mean the average time between consecutive TWT SPs expected by the TWT requesting STA.

The TWT Wake Interval Mantissa subfield is the binary value of the TWT wake interval value, which can be expressed in microseconds.

Referring to FIG. 11, the TWT group assignment subfield, TWT channel, and NDP paging subfield are included only in the individual TWT parameter set field.

The TWT group allocation subfield includes information about the TWT group to which the STA is assigned and provides it to the TWT requesting STA. The TWT value within the TWT group may be calculated using the corresponding information. The TWT value of the STA may be equal to the value of the zero offset and the value of the TWT unit multiplied by the value of the TWT offset.

Here, the TWT group information may include a TWT group ID subfield, a zero offset presence subfield, a group zero offset subfield, a TWT unit subfield, and a TWT offset subfield.

The TWT Group ID subfield may indicate the identifier of the TWT group to which the requesting STA is allocated, and a TWT group may mean a group of STAs having a TWT value within a specific interval of TSF values. If the TWT Group ID subfield value is set to 0, it may indicate a unique TWT group that includes all STAs of the BSS.

The zero offset presence subfield may indicate whether a zero offset subfield of the group exists. For example, if the zero offset presence subfield value is set to 1, it may indicate that a zero offset subfield of the group exists. If the zero offset presence subfield value is set to 0, it may indicate that a zero offset subfield of the group does not exist.

The zero offset subfield of the group is optional and may indicate the initial TWT value of a TWT group identified by the TWT group ID.

The TWT Unit subfield may indicate the increment unit of the TWT value within a TWT group identified by the TWT Group ID. For example, if the TWT Unit time values are 32µs, 256µs, 1024µs, 8.192ms, 32.768ms, and 262.144ms, respectively, the TWT Unit subfield values may be expressed as 0, 1, 2, 3, and 4, respectively.

The TWT offset subfield may indicate the position within a specified group of an STA corresponding to the RA of a frame including a TWT element.

The TWT channel subfield represents a bitmap indicating allowed channels. When transmitted by a TWT requesting STA, the TWT channel subfield may include a bitmap indicating the channel that the STA requests to use as a temporary basic channel during the TWT SP. When transmitted by the TWT response STA, the TWT channel subfield may include a bitmap indicating the channel on which the TWT request is allowed.

The NDP paging subfield is optional and may include the identifier of the STA being paged, information related to the maximum number of TWT wake intervals between NDP paging frames, etc.

Referring to FIG. 12, the broadcast TWT information (broadcast TWT info) subfield is included only in the broadcast TWT parameter set field. The broadcast TWT information subfield may include a 3-bit reservation bit, a 5-bit broadcast TWT identifier (ID) subfield, and an 8-bit broadcast TWT persistence subfield. The broadcast TWT identifier subfield indicates the broadcast ID of a specific broadcast TWT in which the STA requests participation or provides TWT parameters, depending on the value of the TWT setup command subfield of the TWT element. The broadcast TWT persistence subfield indicates the number of TBTTs planned on the schedule of the broadcast TWT.

Next, the detailed configuration of the request type subfield will be described.

First, referring to FIG. 11, the format of the request type subfield of the individual TWT parameter set field will be described.

The TWT request subfield may indicate whether it is a requesting STA or a responding STA. If the value is 1, it may indicate that it is a TWT requesting STA or a scheduling STA, and if the value is 0, it may indicate that it is a TWT responding STA or a scheduling AP.

The TWT setup command subfield may indicate commands such as Request, Suggest, Demand, Accept, Alternate, Dictate, Reject.

The trigger subfield indicates whether to use a trigger frame in TWT SP. If the value is 1, the trigger may be used, and if the value is 0, the trigger may not be used.

The implicit subfield may indicate whether it is an implicit TWT or an explicit TWT. If the value is 1, it may indicate implicit TWT, and if it is 0, it may indicate explicit TWT.

The flow type subfield may indicate the interaction type between the TWT requesting STA (or TWT scheduling STA) and the TWT responding STA (or TWT scheduling AP). If the value is 1, it may mean an announced TWT in which the STA sends a wakeup signal to the AP by transmitting a PS-Poll or APSD (automatic power save delivery) trigger frame before a frame other than a trigger frame is transmitted from the AP to the STA. If the value is 0, it may mean an unannounced TWT.

The TWT flow identifier subfield may include a 3-bit value that uniquely identifies specific information for the TWT request in other requests made between the same TWT request STA and TWT response STA pair.

The TWT wake interval exponent subfield may set the TWT wake interval value in binary microsecond units. In the case of individual TWT, this may mean the gap between individual TWT SPs. The TWT wake interval of the requesting STA may be defined as [TWT Wake Interval Mantissa * 2 * TWT Wake Interval Exponent].

The TWT protection subfield may indicate whether to use the TWT protection mechanism. If the value is 1, TXOP in the TWT SP may be initiated with a NAV protection mechanism such as (MU)RTS/CTS or CTS-to-self frame, and if the value is 0, the NAV protection mechanism may not be applied.

Referring to FIG. 12, some of the subfields of the request type subfield of the broadcast TWT parameter set field are common with the subfields of the request type subfield of the individual TWT parameter set field, so description thereof is omitted. Subfields included only in the broadcast TWT parameter set are described below.

The Last Broadcast Parameter Set subfield indicates whether it is the last broadcast TWT parameter set. If the value is 1, it may indicate that it is the last broadcast TWT parameter set, and if the value is 0, it may indicate that the next broadcast TWT parameter set exists.

The broadcast TWT recommendation subfield may indicate recommendations for the frame type transmitted by the AP during the broadcast TWT SP with a value of 1-7.

For example, when the broadcast TWT recommendation subfield value is set to 4, the corresponding broadcast TWT SP may be referred to as an r-TWT SP. That is, the broadcast TWT parameter set in which the broadcast TWT recommendation subfield value is set to 4 can be referred to as a restricted TWT parameter set. Here, during the r-TWT SP, the AP and member r-TWT scheduled STAs can specify transmission priorities of QoS data frames, which are delay-sensitive traffic. And, a broadcast TWT element including only an r-TWT parameter set field can be referred to as a restricted TWT element.

The last bit of the Request Type subfield of the Broadcast TWT Parameter Set field may be reserved.

As an example of the present disclosure, the broadcast TWT parameter set field may include a restricted TWT traffic information (info) subfield. As an example, the TWT traffic information subfield may follow the broadcast TWT info field of the broadcast TWT parameter set field as illustrated in FIG. 12.

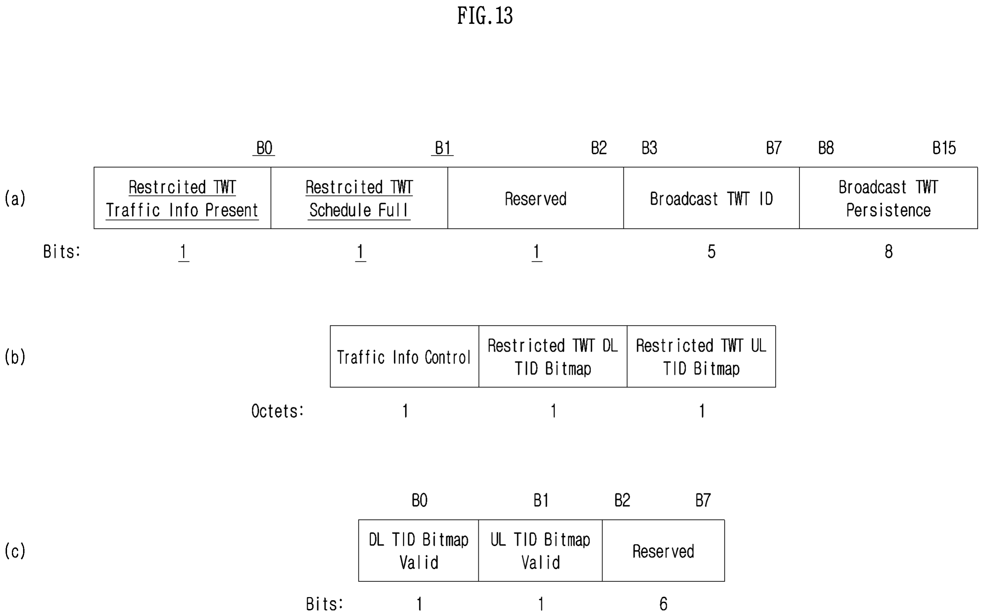

As an example of the present disclosure, as illustrated in (a) of FIG. 13, the broadcast TWT information subfield may include a restricted TWT traffic information presence subfield and a restricted TWT schedule full subfield.

The TWT Traffic Information Presence subfield and the restricted TWT Schedule Full subfield may be set in the first bit (B0) and the second bit (B1) of the broadcast TWT information field as illustrated in FIG. 12, respectively.

For example, if the restricted TWT traffic information field is present on the broadcast TWT parameter set field, the restricted TWT traffic information presence subfield value of the restricted TWT parameter set field may be set to 1. Otherwise, the restricted TWT traffic information presence subfield value may be set to 0. For non-EHT STAs, the restricted TWT traffic information presence subfield may be reserved.

If the Restricted TWT Schedule Full subfield value is set to 1, it may indicate that the r-TWT scheduling AP is unlikely to accept a request from a STA of the BSS to establish a new membership in that schedule. Otherwise, the Restricted TWT Schedule Full subfield value may be set to 0.

The Restricted TWT Schedule Full subfield may be valid if the Restricted TWT Parameter Set field is carried in a TWT element with the Negotiation Type subfield set to 2 and the TWT element is transmitted by an EHT AP.

If the Restricted TWT Traffic Information Presence subfield value of the Broadcast TWT Information subfield is set to 1, the Restricted TWT Traffic Information field may be present in the Restricted TWT Parameter Set field.

As illustrated in (b) of FIG. 13, the restricted TWT traffic information field may include a traffic information control subfield, a restricted TWT DL TID bitmap subfield, and a restricted TWT UL TID bitmap subfield.

As illustrated in (c) of FIG. 13, the traffic information control field may include a DL TID bitmap valid subfield and a UL TID bitmap valid subfield.

The DL TID Bitmap Valid subfield may be set to 1 to indicate that the restricted TWT DL TID bitmap field is valid. The DL TID Bitmap Valid subfield may be set to 0 to indicate that DL traffic of all TIDs mapped to the DL for a link for which r-TWT membership is established is identified as delay sensitive traffic and the restricted TWT DL TID bitmap field is reserved.

The UL TID Bitmap Valid subfield can be set to 1 to indicate that the restricted TWT UL TID bitmap field is valid. The UL TID Bitmap Valid subfield can be set to 0 to indicate that UL traffic of all TIDs mapped to the UL for a link for which r-TWT membership is established is identified as delay sensitive traffic and the restricted TWT UL TID bitmap field is reserved.

The Restricted TWT DL TID Bitmap and Restricted TWT UL TID Bitmap subfields may specify TIDs identified as delay sensitive traffic streams in DL and UL directions, respectively, by an r-TWT scheduling AP or an R-TWT scheduling STA.

A value of 1 at bit position k in the bitmap may indicate that TID k is classified as a delay-sensitive traffic stream. A value of 0 at bit position k in the bitmap may indicate that TID k is not classified as a delay-sensitive traffic stream.

### R-TWT Membership Setup and R-TWT SP Announcement

R-TWT membership may be established using the same procedure used to establish broadcast TWT membership, except that the broadcast TWT element carried on the TWT setup frame includes one or more restricted TWT parameter set fields. An R-TWT scheduling AP may set the trigger field to 1 in the R-TWT parameter set field it transmits. When included in an individually addressed TWT setup frame transmitted by an R-TWT scheduling AP or an R-TWT scheduling STA, the R-TWT traffic information present subfield of the broadcast TWT information field included in the R-TWT parameter set field may be set to 1.

An R-TWT scheduling AP and an R-TWT scheduling STA may set a restricted TWT traffic information field to identify a TID that carries latency-sensitive traffic in the DL and UL for the established R-TWT membership.

When R-TWT membership is established, the EHT AP may advertise R-TWT schedule information by including a restricted TWT parameter set field in a broadcast TWT element included in a transmitted management frame. The membership may be established with a non-transmitting AP belonging to the same multi-BSSID set or co-hosted BSSID set as the associated EHT AP or the transmitting AP. The transmitted BSSID in the multi-BSSID set may include all R-TWT schedules advertised for the transmitting BSSID and all non-transmitting BSSIDs in the same multi-BSSID set.

An R-TWT scheduling AP including an R-TWT Parameter Set field in a broadcast TWT element may set the Restricted TWT Traffic Information Present subfield of the Restricted TWT Parameter Set field to 0 when the Negotiation Type subfield of the TWT element is 2. A non-AP STA may not request membership establishment in an R-TWT schedule advertised by an R-TWT scheduling AP with the Restricted TWT Schedule subfield set to 2. An R-TWT scheduling AP may determine a start time of an R-TWT SP occurring after a first R-TWT SP (a next R-TWT SP start time) in a periodic R-TWT schedule based on a start time of a first R-TWT SP and a TWT wake interval of the corresponding R-TWT schedule.

### TXOP and backoff procedure rules for R-TWT SP

A non-AP EHT STA (e.g., a TXOP holder) with "dot11RestrictedTWTOptionImplemented" set to true may ensure that the TXOP ends before the start time of an active R-TWT SP advertised by the associated AP or an AP corresponding to a BSSID transmitted in a multi-BSSID set to which the associated AP belongs.

Here, TXOP refers to a time interval during which a specific STA may have the right to initiate a frame exchange sequence on a wireless medium (WM). TXOP may be defined by a starting time (during which the STA may have the right) and a maximum duration value.

And, a TXOP holder means an STA that has been granted a TXOP by the HC (hybrid coordinator) or has successfully competed for the TXOP. In other words, a TXOP holder means an STA that has the authority to perform a frame exchange sequence within a TXOP. A TXOP respondent means an STA that transmits a frame as a response to a frame received from the TXOP holder during a frame exchange sequence, but has not acquired a TXOP during the process.

Additionally, before starting a PPDU transmission, a non-AP EHT STA with "dot11RestrictedTWTOptionImplemented" set to true may check if there is enough time to complete frame exchange before the R-TWT SP starts, and if there is not enough time, the STA may postpone transmission by selecting a random backoff count using the current CW (without advancing to the next value in the sequence). An R-TWT schedule that is announced in a beacon or probe response frame and is not in a non-transmitted BSSID profile may include schedules for both transmitted and non-transmitted BSSIDs.

An EHT AP (i.e., TXOP holder) with "dot11RestrictedTWTOptionImplemented" set to true may ensure that the TXOP ends before the start time of its own advertised active R-TWT SP, as long as the remaining part of the TXOP belonging to the R-TWT SP is not used to forward DL frames of the R-TWT DL TID or to request UL frames of the R-TWT UL TID.

When an R-TWT SP starts, a member STA may suspend decrementing the backoff counter of an AC without a mapped R-TWT TID until all frames in the R-TWT TID are delivered, and the member STA may resume decrementing thereafter or when the SP terminates.

### Quiet interval associated with R-TWT SP

An R-TWT scheduling AP may schedule at most one quiet interval overlapping an R-TWT SP, wherein the (overlapping) quiet interval has a duration of 1 time unit (TU) and may start simultaneously with the R-TWT SP.

To schedule overlapping quiet intervals for one or more R-TWT SPs belonging to one or more periodic or aperiodic R-TWT schedules, an EHT AP may do so by transmitting one or more quiet elements in the beacon and probe response frames.

An EHT AP associated with an AP MLD may not include any quiet elements corresponding to overlapping quiet intervals scheduled and advertised by other APs affiliated with the same AP MLD in their transmitted beacon or probe response frames. Non-AP EHT STAs may behave as if the overlapping quiet intervals do not exist.

### Multi-Access Point (MAP) Operation

Hereinafter, examples of the present disclosure for multi-access point (MAP) operation are described.

MAP operation may be a general term for a technique in which multiple APs/STAs cooperate with each other to transmit and receive data when communicating with other STA(s). MAP operation may include a first method (i.e., multi-APs/STAs co-transmission method) in which multiple APs simultaneously transmit data to STA(s), and a second method (i.e., multi-APs/STAs coordination method) in which an appropriate AP among multiple APs divides an appropriate area (e.g., frequency/time/spatial area) and then transmits data to specific STA(s) (i.e., appropriate STA(s)).

Specifically, the first method may include a method in which multiple APs/STAs perform communication with each STA at the same time (e.g., a coordinated spatial reuse (C-SR) method) and a method in which multiple APs/STAs perform joint transmission to the same STA(s) (e.g., a joint transmission (J-TX) method).

In the case of the C-SR method, multi-APs/STAs share channel information (e.g., transmit power (Tx power), RSSI (Received Signal Strength Indicator), etc.) with STA(s), and can communicate with STA(s) at the same time based on the channel information. In the case of the J-TX method, multi-APs/STAs share channels and data with STA(s), and can communicate with STA(s) at the same time based on the shared channels and data.

As described above, the second method refers to a method in which APs/STAs divide a frequency, time, or space domain and communicate with other STA(s) in the divided domain. The frequency domain-based communication method may include the C(coordinated)-OFDMA method, the time domain-based communication method may include AP selection, relay operation, C(coordinated)-TDMA (time division multiple access), V(virtual)-BSS method, etc., and the space domain-based communication method may include the C(coordinated)-BF (beamforming) method, etc.

For example, in the case of a frequency domain-based communication method, multi-APs/STAs may share channel information according to frequency bands with STA(s), and select an appropriate frequency band based on the shared channel information. Multi-APs/STAs may communicate with STA(s) in the selected frequency band.

As another example, in the case of a time domain-based communication method, a representative AP may be set to lead communication by having the STA(s) select an appropriate AP/STA(s) (here, the representative AP is also included).

As another example, in the case of a space domain-based communication method, multi-APs/STAs may share channel information with STA(s), and calculate a BF matrix suitable for communication of each AP or that does not cause interference to other APs. Multi-APs/STAs can communicate with STA(s) based on the calculated BF matrix.

To support the MAP operation described above, a representative AP may select and instruct an AP/STA (hereinafter, a participating AP/STA) for communication with an STA.

The representative AP (here, the representative AP may be replaced with a master AP, a sharing AP, or a primary AP) initiates and controls MAP operations for transmission and reception between multiple APs. The representative AP groups participating APs and manages links with participating APs so that information may be shared between the participating APs. The representative AP manages information about the BSS comprised of the participating APs and information about STAs associated with the BSS.

Participating APs (wherein, the participating AP may be replaced by a slave AP, a shared AP, or a secondary AP) associate with the representative AP and may share control information, management information, and data traffic with each other. Participating APs perform the same basic functions as APs that can establish a BSS in a wireless LAN.

In MAP operation, a participating STA may associate with a participating AP or a representative AP and form a BSS.

In a MAP environment, a representative AP and a participating AP may directly transmit and receive data to and from each other. A representative AP and an STA may not be able to directly transmit and receive data to and from each other. A participating AP (e.g., a participating AP associated with an STA) may directly transmit and receive data to and from the STA. One of the participating APs may become a representative AP.

### Method for protecting OBSS R-TWT within a multi-BSS

In a multi-BSS environment, the range of an overlapping BSS (hereinafter, OBSS) is formed/set based on the range in which an STA may receive frames (e.g., beacon frames, etc.) transmitted from one or more APs.

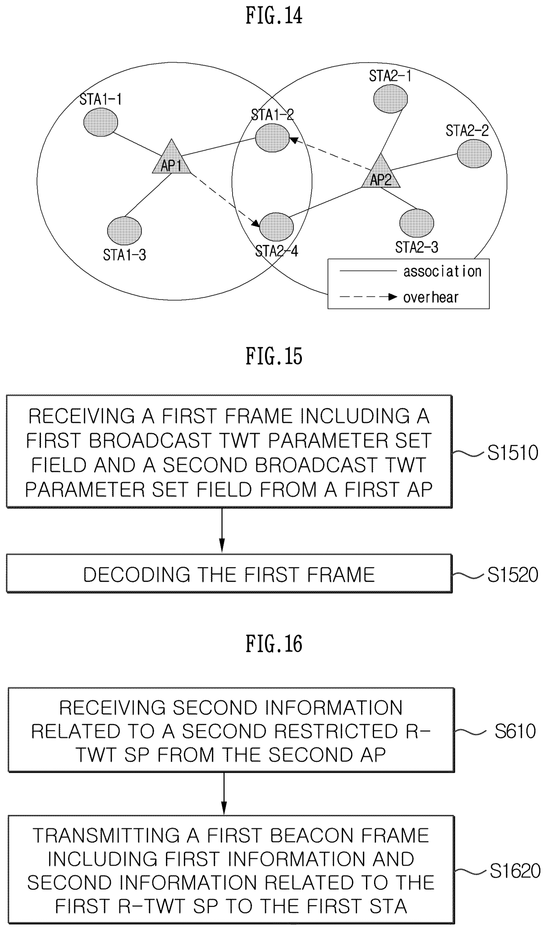

For example, as illustrated in FIG. 14 below, the signaling ranges of AP 1 and AP 2 may overlap, and STA(s) (e.g., STA 1-2 or/and STA 2-4) located within the range may receive the beacon frame transmitted by AP 1 within the BSS 1 to which it is associated as well as the beacon frame of AP 2 within the BSS 2 to which it is not associated.

Here, AP 1 and AP 2 may be slave APs belonging to a multi-AP group having the same master AP, but are not limited thereto. Either AP 1 or AP 2 may be the master AP.

The AP may transmit a beacon frame including scheduling information of the R-TWT to the corresponding STA(s). At this time, the STA(s) receiving the beacon frame may be located within the range protecting the R-TWT SP(s). For example, the STA(s) may protect the R-TWT SP based on the R-TWT scheduling information received from the AP according to the above-described method.

However, the STA(s) located in the range corresponding to the OBSS may receive a beacon frame from a neighboring AP (i.e., an AP of a BSS to which the STA(s) are not associated) (e.g., AP 2), and the beacon frame can include R-TWT (hereinafter, OBSS R-TWT) scheduling information generated by the neighboring AP. Previously, there was a problem in that not only was there no definition of a method for the STA(s) to protect the OBSS R-TWT SP, but also a method for transmitting and receiving low-latency traffic/data during the OBSS R-TWT SP.

Hereinafter, various operations (e.g., OBSS R-TWT SP protection operation, etc.) based on the R-TWT scheduling information of the neighboring AP (OBSS) by the STA and the AP of the BSS to which the STA is connected (e.g., AP 1) will be described.

In describing the present disclosure, an STA may include a non-AP STA and an AP STA, and an R-TWT SP announced by an AP of a BSS to which an STA is not associated may be referred to as an OBSS R-TWT SP or an R-TWT SP scheduled by another AP. In addition, an associated AP may mean an AP of a BSS to which an STA is associated (i.e., a BSS AP).

FIG. 15 is a flowchart illustrating the operation of an STA according to one embodiment of the present disclosure. Here, the STA may be associated with the BSS of the first AP. That is, from the perspective of the STA, the second AP may be a neighboring AP. The STA may be located in an area where the BSS of the first AP and the BSS of the second AP overlap, but is not limited thereto.

The STA may receive a first frame including a first broadcast target wake time (TWT) parameter set field and a second broadcast TWT parameter set field from a first access point (AP) (S1510). Here, the first frame may include, but is not limited to, a management frame such as a beacon frame.

As an example of the present disclosure, a first broadcast TWT parameter set field (i.e., a broadcast parameter set associated with a first R-TWT SP scheduled by a first AP) and a second broadcast TWT parameter set field (i.e., a broadcast parameter set associated with a second R-TWT SP scheduled by a second AP (i.e., an OBSS R-TWT SP)) may be included in a single TWT element (e.g., a first TWT element) included in a first frame. That is, the first TWT element may include a plurality of broadcast parameter sets including the first broadcast parameter set and the second broadcast parameter set. In this case, the second broadcast parameter set may be, but is not limited to, the last broadcast parameter set among the plurality of broadcast parameter sets included in the first TWT element of the first frame.

In another example of the present disclosure, the first frame may include a second TWT element and a third TWT element, the first broadcast parameter set may be included in the second TWT element, and the second broadcast parameter set may be included in the third TWT element. That is, the first broadcast parameter set and the second broadcast parameter set may each be included in a separate TWT element.

For example, first information and a first broadcast TWT ID related to a first R-TWT SP scheduled by a first AP may be included in a first broadcast TWT parameter set, and second information and a second broadcast TWT ID related to a second R-TWT SP scheduled by a second AP may be included in a second broadcast TWT parameter set. That is, the first broadcast TWT ID may correspond to the first information, and the second broadcast TWT ID may correspond to the second information. Through this, an STA (e.g., a UHR STA supporting enhanced R-TWT, etc.) may be able to distinguish the first information and the second information.

For example, if a first broadcast TWT parameter set and a second broadcast TWT parameter set are included on a first TWT element, the STA may identify the second broadcast parameter set including information related to the second R-TWT SP through the second broadcast TWT ID. That is, the STA may identify the second broadcast parameter set included in the third TWT element (i.e., the second broadcast parameter set including the second broadcast TWT ID) through the second broadcast TWT ID on the first TWT element. As another example, the STA may identify that the second broadcast parameter set on the first TWT element is related to the second R-TWT SP through the second broadcast TWT ID corresponding to/mapped to/defined in the second R-TWT SP.

In another example of the present disclosure, the inclusion of second information in the first TWT element may be indicated through a TWT recommendation field included in the first TWT element of the first frame. For example, information indicating that the second information is included in the first TWT element may be mapped/corresponded to a reserved value (e.g., 5 to 7) of the TWT recommendation field. In another example, the inclusion of second information in the third TWT element may be indicated through a TWT recommendation field included in the third TWT element.

In another example of the present disclosure, the inclusion of second information in the WP1 TWT element may be indicated through an NDP paging indicator subfield and a responder power management (PM) subfield included in a control field of the first TWT element. In another example, the inclusion of second information in the third TWT element may be indicated through an NDP paging indicator subfield and a responder PM subfield included in a control field of the third TWT element.

The first STA may decode the first frame (S1520). The first STA may perform an operation to protect the second R-TWT SP based on the information included in the first frame.

For example, the STA may terminate its transmission opportunity (TXOP) before the start time of the second R-TWT SP.

For example, the broadcast TWT information (info) subfield of the second broadcast TWT parameter set may include an R-TWT schedule information subfield, and the R-TWT schedule information subfield may include information indicating that a membership request related to the second R-TWT SP by the STA is not permitted. Accordingly, a membership request based on the second broadcast TWT ID related to the second R-TWT SP of the STA may be prevented.

As another example, the R-TWT information subfield included in the broadcast TWT information subfield of the second broadcast TWT parameter set may include information indicating that the second information is related to a second R-TWT SP scheduled by a second AP corresponding to a nontransmitted BSSID.

As another example, the value of the broadcast TWT persistence subfield included in the second broadcast parameter set field may be set to a predefined minimum value (e.g., 1, etc.).

The method performed by the STA described in the example of FIG. 15 may be performed by the first device (100) of FIG. 1. For example, one or more processors (102) of the first device (100) of FIG. 1 may receive a first frame including a first broadcast TWT parameter set field and a second broadcast TWT parameter set field from a first access point (AP) through one or more transceivers (106). The one or more processors (102) may decode the first frame.

The above memory (104) can store instructions for performing the method described in the example of FIG. 15 when executed by one or more processors (102).

FIG. 16 is a drawing for describing the operation of the first AP according to one embodiment of the present disclosure.

The first AP may receive second information related to a second restricted target wake time (R-TWT) service period (SP) from the second AP (S1610).

The first AP receiving the second information from the second AP may include an action of the first AP receiving the second information via another entity.

The first AP may transmit a first beacon frame including first information and second information related to the first R-TWT SP to the first STA (S1620).

The configuration of the first beacon frame transmitted by the first AP to the first STA to protect/process the second R-TWT SP has been described with reference to FIG. 15, so any duplicate description will be omitted.

The method performed by the second STA described in the example of FIG. 16 may be performed by the second device (200) of FIG. 1. For example, one or more processors (202) of the second device (200) of FIG. 10 may receive second information related to the second R-TWT SP from the second AP through one or more transceivers (206). The one or more processors (202) may transmit a first beacon frame including the first information and the second information related to the first R-TWT SP to the first STA through one or more transceivers (206).

Furthermore, one or more memories (204) of the second device (200) may store instructions for performing the method described in the example of FIG. 16 when executed by one or more processors (202).

Hereinafter, the method in which the STA and the first AP process OBSS R-TWT scheduling information will be specifically described with reference to FIGS. 15 and 16.

### Embodiment 1

Hereafter, the method in which the STA and the first AP process OBSS R-TWT scheduling information will be specifically described with reference to FIGS. 15 and 16.

Method 1: When direct wired/wireless data transmission and reception between APs (i.e., Associated AP and neighboring AP(s)) is possible, Associated AP may transmit its R-TWT scheduling information to neighboring AP(s) or receive OBSS R-TWT scheduling information from neighboring AP(s).

Method 2: If direct wired/wireless data transmission and reception between APs is not possible, APs can share R-TWT scheduling information through a third-party management entity. That is, APs may share R-TWT scheduling information by using the third-party management entity as a relay entity.

For example, APs may be located within the same ESS. Within the same ESS, where multiple BSSs are connected to a single DS, a third-party management entity may provide the same service (e.g., a centralized service). Accordingly, the third-party management entity relaying APs within the same ESS may serve a role such as a master AP or a network controller.

As another example, APs may be slaves (i.e., Shared AP or/and Scheduled AP) with the same AP as the master AP (i.e., Sharing AP or/and Scheduling AP). In this case, the third management entity may be the master AP.

Method 3: The STA may overhear a beacon frame announced by a neighboring AP and decode the overheard beacon frame. Then, the STA may transmit information related to the OBSS R-TWT SP included in the decoded beacon frame to the Associated AP.

### Embodiment 2

Embodiment 2 relates to a method for protecting OBSS R-TWT by STA type classified according to whether R-TWT is supported.

Depending on whether R-TWT is supported, STA types may be classified as follows:
- Pre-EHT STA that does not support R-TWT: This refers to an STA with Pre-EHT capabilities and may correspond to a legacy STA.
- EHT STA that does not support R-TWT: This is an STA with EHT capability, and may correspond to an STA that does not support R-TWT.
- EHT STA supporting R-TWT: This is an STA with EHT capability and may correspond to an STA supporting R-TWT. In this case, the EHT STA supporting R-TWT may be defined/configured not to consider the protection operation for the OBSS R-TWT SP.

Additionally, a UHR STA (or an STA on a wireless LAN system after an IEEE 802.11 be-based wireless LAN system) may be classified based on whether it supports R-TWT and/or OBSS R-TWT. For example, a UHR STA may transmit capability information indicating whether it supports R-TWT and/or OBSS R-TWT to another STA (e.g., an AP), and the type of the UHR STA may be classified based on the capability information.
- UHR STA that does not support R-TWT: This is an STA with UHR capability, and may correspond to an STA that does not support R-TWT.
- UHR STA supporting only R-TWT: This may correspond to an STA that has UHR capability but supports only R-TWT (i.e., operations and parameters related to R-TWT as illustrated in FIGS. 8 to 13). A UHR STA supporting only R-TWT may, but is not limited to, be unable to decode information related to OBSS R-TWT (e.g., information related to enhanced R-TWT). A UHR STA supporting only R-TWT may also be able to decode information related to OBSS R-TWT.
- UHR STA supporting enhanced R-TWT: This may correspond to an STA that supports UHR capability and supports enhanced R-TWT operation. The enhanced R-TWT operation may include protection operations for OBSS R-TWT SP, etc.

### Embodiment 2-1

Embodiment 2-1 relates to a method for an STA classified in Embodiment 2 to protect an OBSS R-TWT SP. The method for protecting an OBSS R-TWT SP may be defined/applied by extending the above-described methods for an STA to report an R-TWT SP (e.g., overlapping quiet intervals and/or TXOP and backoff procedure rules of an R-TWT SP, etc.).

Here, the TXOP and backoff procedure rules of the R-TWT may include a rule for an STA (i.e., a TXOP holder) transmitting and receiving data during a TXOP that started before the R-TWT start time to stop the TXOP. The TXOP and backoff procedure rules of the R-TWT may also be applied to the OBSS R-TWT SP in the same manner. That is, a rule may be defined for an STA (i.e., a TXOP holder) transmitting and receiving data during a TXOP that started before the OBSS R-TWT start time to stop the TXOP.

In addition, the overlapping quiet interval may mean a quiet interval allocated to overlap with the R-TWT SP for the same period of time. The BSS AP may set the quiet interval to overlap with the OBSS R-TWT SP obtained through the method of obtaining the OBSS R-TWT scheduling information disclosed in Embodiment 1. For example, the R-TWT scheduling AP (e.g., the BSS AP) may set at least one (or at most one) overlapping interval that overlaps with the R-TWT SP and/or the OBSS R-TWT SP.

Hereinafter, a method for protecting OBSS R-TWT SP by STA type classified in Embodiment 2 is described.
- Pre-EHT STA that does not support R-TWT: The STA may protect the OBSS R-TWT SP through an overlapping quiet interval. For example, a Pre-EHT STA that does not support R-TWT may protect the OBSS R-TWT SP (through an overlapping quiet interval set by the BSS AP to include the OBSS R-TWT SP).
- EHT STA that does not support R-TWT: The STA may protect the OBSS R-TWT SP through overlapping quiet intervals. For example, an EHT STA that does not support R-TWT may protect the OBSS R-TWT SP (through overlapping quiet intervals set by the BSS AP to include the OBSS R-TWT SP).
- EHT STA supporting R-TWT: The behavior of an EHT STA supporting R-TWT may be determined depending on whether the BSS AP announces information about an OBSS R-TWT SP (i.e., an R-TWT SP scheduled/allocated by a neighboring AP) together with information about an R-TWT SP allocated by the BSS AP. Option 1 below relates to the case where the BSS AP announces an OBSS R-TWT SP to the STA (i.e., an EHT STA supporting R-TWT) together with information about an R-TWT SP allocated by the BSS AP, and option 2 relates to the case where the BSS AP does not announce an OBSS R-TWT SP to the STA together with information about an R-TWT SP allocated by the BSS AP.
- Option 1: When the BSS AP announce the OBSS R-TWT SP to the STA along with the information of the R-TWT SP allocated by the BSS AP, the STA may protect the OBSS R-TWT SP by stopping the TXOP in progress before the OBSS R-TWT SP based on the TXOP and back-off procedure rules of the R-TWT SP.

The BSS AP may configure the OBSS R-TWT SP information in the same manner as the R-TWT SP information, so that the STA may not be able to distinguish between the OBSS R-TWT SP and the R-TWT SP. However, the BSS AP may configure the OBSS R-TWT SP information to correspond to the value of a specific broadcast TWT ID. In this case, the broadcast TWT ID corresponding to the OBSS R-TWT SP information may not overlap with the broadcast TWT ID corresponding to the R-TWT SP information allocated/scheduled by the BSS AP (i.e., the R-TWT SP information allocated by the BSS AP within its BSS).

For example, a non-AP EHT STA (i.e., a TXOP holder) with "dot11RestrictedTWTOptionImplemented" set to true may ensure that the TXOP ends before the start time of an active R-TWT SP, which may include an R-TWT SP scheduled/advertised by an AP corresponding to a BSSID transmitted in an associated AP or a multi-BSSID set to which the associated AP belongs and/or an R-TWT SP scheduled/advertised by an (other) AP included in the multi-AP set.

Here, the broadcast TWT element including the OBSS R-TWT SP information may include a broadcast TWT information (Info) subfield, and the broadcast TWT information subfield may include a restricted TWT schedule information subfield. The BSS AP may set the value of the restricted TWT schedule information subfield to a value indicating a full R-TWT schedule. Here, the full R-TWT schedule indicated by the restricted TWT schedule information subfield may mean an R-TWT schedule that cannot accept a new membership request from an STA. Through this, the STA may be prevented from requesting membership based on a broadcast TWT ID including the OBSS R-TWT SP information.

Additionally or alternatively, the BSS AP may set the value of the restricted TWT schedule information subfield to a value (e.g., 3) indicating that the corresponding R-TWT SP is an R-TWT SP scheduled by an AP corresponding to a nontransmitted BSSID. This allows an STA associated with an AP corresponding to the transmitted BSSID to recognize the corresponding R-TWT SP (i.e., an OBSS R-TWT SP) as not being an R-TWT SP scheduled by an AP of the BSS to which it belongs.

According to the above-described method, an STA associated with a BSS that has been notified of an R-TWT SP may recognize the OBSS R-TWT SP information as information about an SP allocated by another R-TWT member (e.g., an AP of a BSS to which the STA itself does not belong).

Option 2: If the BSS AP does not announce the OBSS R-TWT SP (i.e., the OBSS R-TWT SP scheduled by the neighboring AP) to the STA along with the information of the R-TWT SP it has allocated, the EHT STA supporting R-TWT may protect the OBSS R-TWT SP through the overlapping quiet interval set by the BSS AP to include the OBSS R-TWT SP.
- UHR STA that does not support R-TWT: The STA may protect the OBSS R-TWT SP through an overlapping quiet interval set by the BSS AP to include the OBSS R-TWT SP.
- UHR STA supporting only R-TWT: The operation of UHR STA supporting only R-TWT may be determined depending on whether the BSS AP announces information about OBSS R-TWT SPs (i.e., R-TWT SPs scheduled/allocated by neighboring APs) together with information about R-TWT SPs allocated by the BSS AP.

As an example of the present disclosure, when a BSS AP announces an OBSS R-TWT SP to a corresponding STA along with information on an R-TWT SP allocated by the BSS AP, the corresponding STA can protect the OBSS R-TWT SP by stopping a TXOP that was in progress before the OBSS R-TWT SP based on the TXOP and back-off procedure rules of the R-TWT SP.

The BSS AP may configure the OBSS R-TWT SP information in the same manner as the R-TWT SP information, so that the STA may not be able to distinguish between the OBSS R-TWT SP and the R-TWT SP. However, the BSS AP may configure the OBSS R-TWT SP information to correspond to the value of a specific broadcast TWT ID. In this case, the broadcast TWT ID corresponding to the OBSS R-TWT SP information may not overlap with the broadcast TWT ID corresponding to the R-TWT SP information allocated/scheduled by the BSS AP (i.e., the R-TWT SP information allocated by the BSS AP within its BSS).

Here, the broadcast TWT element including the OBSS R-TWT SP information may include a broadcast TWT information subfield, and the broadcast TWT information subfield may include a restricted TWT schedule information subfield. The BSS AP may set the value of the restricted TWT schedule information subfield to a value indicating a full R-TWT schedule. At this time, the full R-TWT schedule indicated by the restricted TWT schedule information subfield may mean an R-TWT schedule that cannot accept a new membership request from an STA. Through this, the STA may be prevented from requesting membership based on a broadcast TWT ID including the OBSS R-TWT SP information.

As another example of the present disclosure, if a BSS AP does not announce the information about the R-TWT SP allocated by the neighboring AP (i.e., the OBSS R-TWT SP) together with the information about the R-TWT SP allocated by the BSS AP to the STA, the STA may protect the OBSS R-TWT SP through an overlapping quiet interval set by the BSS AP to include the OBSS R-TWT SP.

Additionally or alternatively, the BSS AP may set the value of the restricted TWT schedule information subfield to a value (e.g., 3) indicating that the corresponding R-TWT SP is an R-TWT SP scheduled by an AP corresponding to a nontransmitted BSSID. This allows an STA associated with an AP corresponding to the transmitted BSSID to recognize the corresponding R-TWT SP (i.e., an OBSS R-TWT SP) as not being an R-TWT SP scheduled by an AP of the BSS to which it belongs.

As another example of the present disclosure, if a BSS AP does not announce the information about the R-TWT SP allocated by the neighboring AP (i.e., the OBSS R-TWT SP) together with the information about the R-TWT SP allocated by the BSS AP to the STA, the STA may protect the OBSS R-TWT SP through an overlapping quiet interval set by the BSS AP to include the OBSS R-TWT SP.

According to the above-described method, an STA associated with a BSS that has been notified of an R-TWT SP can recognize the OBSS R-TWT SP information as information about an SP allocated by another R-TWT member (e.g., an AP of a BSS to which the STA itself does not belong).

As an example of the present disclosure, it is assumed that the STA requests membership based on a broadcast TWT ID corresponding to OBSS R-TWT SP information. In this case, the AP may reject the membership request based on the broadcast ID corresponding to the OBSS R-TWT SP.
- UHR STA supporting enhanced R-TWT: the STA may protect the OBSS R-TWT SP based on the TXOP and back-off procedure rules of the R-TWT SP.

For example, a Non-AP EHT STA (e.g., TXOP holder) with "dot11RestrictedTWTOptionImplemented" set to true may ensure that the TXOP ends before the start time of an active R-TWT SP advertised by the associated AP, the AP corresponding to the BSSID transmitted in the multi-BSSID set to which the associated AP belongs, or an AP included in the same multi-AP set (or a non-associated AP/neighbor AP).

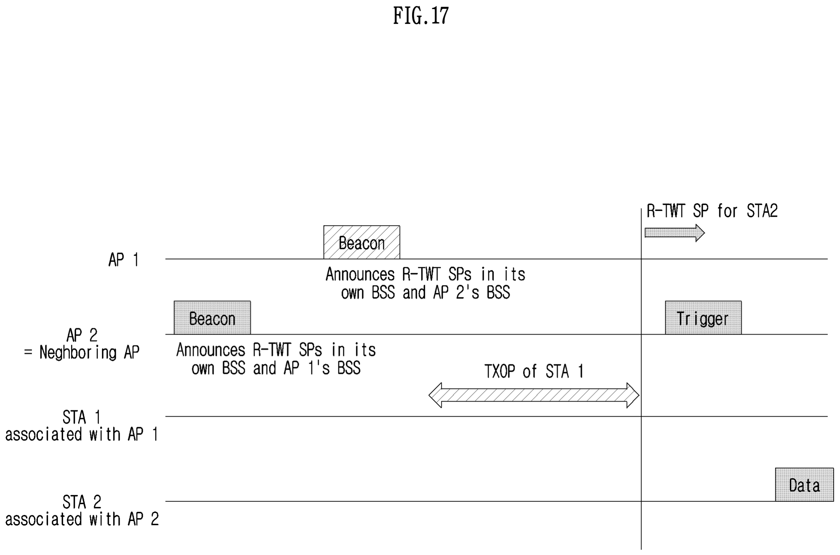

For example, as illustrated in FIG. 17, a UHR STA supporting enhanced R-TWT (e.g., STA 1) may terminate its TXOP prior to the start time of an OBSS R-TWT SP to protect an OBSS R-TWT SP announced by an AP of the BSS to which the STA is associated (i.e., the associated AP) (e.g., AP 1) (i.e., an R-TWT SP scheduled by a neighboring AP (e.g., AP 2)).

As an example of the present disclosure, a UHR STA supporting enhanced R-TWT can protect an OBSS R-TWT SP through overlapping quiet intervals.

For example, if a UHR STA supporting enhanced R-TWT does not receive a beacon frame and is therefore unaware that a specific quiet interval overlaps with an OBSS R-TWT SP, the UHR STA supporting enhanced R-TWT may protect the OBSS R-TWT SP by operating according to the quiet interval assigned by an AP (e.g., a BSS AP). In this case, information related to the quiet interval assigned by the AP can be transmitted to the STA in a frame separate from the beacon frame.

As described above, when an AP (e.g., a BSS AP) announces an R-TWT SP including information of an OBSS R-TWT SP, EHT STA(s) supporting R-TWT and/or UHR STA(s) supporting only R-TWT can recognize that the OBSS R-TWT SP(s) are also SPs of separate R-TWT member(s) assigned by the AP.

Here, the STA(s) may request membership through an R-TWT member corresponding to the OBSS R-TWT SP. Since the SP and/or the STAs correspond to an inter-BSS, the STA(s) may not belong to/correspond to the broadcast TWT ID corresponding to the OBSS R-TWT SP. At this time, the AP (e.g., BSS AP) may operate in one or more of the following ways.
- If the STA(s) make a membership request based on the broadcast TWT ID corresponding to the OBSS R-TWT SP, the AP may reject the membership request.
- The AP may transmit information about the R-TWT SP to the corresponding STA(s) via a beacon frame. Here, the restricted TWT element including the OBSS R-TWT SP may include a broadcast TWT information subfield, and the value of the broadcast TWT persistence subfield of the broadcast TWT information subfield may be set to a minimum value (e.g., 1). Setting the broadcast TWT persistence subfield value to the minimum value means that the validity duration of the corresponding R-TWT SP may exist only until the next beacon interval. Through this, the corresponding STA(s) may be prevented from performing a membership request based on the broadcast TWT ID corresponding to the corresponding R-TWT SP.

Here, the minimum value that the AP sets in the broadcast TWT persistence subfield within the limited TWT element including the OBSS R-TWT SP may be independent of the actual time that the OBSS R-TWT SP may exist. This may prevent overload of the AP due to membership requests for the broadcast TWT ID corresponding to the OBSS R-TWT SP from a large number of STAs.

### Embodiment 3

In one embodiment of the present disclosure, an AP may announce information about an R-TWT SP scheduled/allocated by the AP and information about an OBSS R-TWT SP to the STA. At this time, if the STA is an STA supporting enhanced R-TWT (e.g., a UHR STA supporting enhanced R-TWT), the STA may distinguish between the OBSS R-TWT SP and the R-TWT SP allocated by the AP. The AP (e.g., a BSS AP) may indicate to STA(s) (STA(s) associated with the BSS) that a specific R-TWT SP is an OBSS R-TWT SP through one of the methods according to the embodiments described below (Embodiment 3-1, Embodiment 3-2, and Embodiment 3-3).

### Embodiment 3-1

Method 1: As an example of the present disclosure, the broadcast TWT information subfield may include a restricted TWT traffic information presence subfield. Since the restricted TWT traffic information subfield is not included in the beacon frame, the restricted TWT traffic information presence subfield value of the broadcast TWT information subfield included in the beacon frame may always be set to 0. As another example, when the restricted TWT traffic information presence subfield value included in the beacon frame is set to 1, this may mean that the broadcast TWT element included in the beacon frame includes information related to an R-TWT SP (i.e., an OBSS R-TWT SP) scheduled by a neighboring AP. That is, the restricted TWT traffic information presence subfield set to 1 included in the beacon frame may not mean that the broadcast TWT element has a restricted TWT traffic information subfield, but rather that the broadcast TWT element is related to an R-TWT SP scheduled by a neighboring AP.

Method 2: Additionally or alternatively, as an example of the present disclosure, OBSS R-TWT SP information and a value of a specific broadcast TWT ID may be set to correspond, so that an STA (e.g., a UHR STA supporting enhanced R-TWT, etc.) may identify that the OBSS R-TWT SP information is information about an R-TWT SP scheduled by a neighboring AP. An AP within a BSS may set a broadcast TWT ID corresponding to each R-TWT SP information allocated within its BSS and a broadcast TWT ID corresponding to OBSS R-TWT SP(s) information (scheduled by a neighboring AP) so as not to overlap.

Additionally or alternatively, the duplication of broadcast TWT IDs within a broadcast TWT parameter set field including one or more OBSS R-TWT schedule information may not be limited. That is, there may be multiple corresponding broadcast TWT IDs for each of multiple OBSS R-TWT schedules. As another example, there may be one specific broadcast TWT ID corresponding to multiple OBSS R-TWT schedules.

Additionally or alternatively, i) a specific broadcast TWT ID indicating that it is an OBSS R-TWT SP and ii) the values of the NDP Paging Indicator subfield and the Responder PM Mode subfield of the Control field within the TWT element may be utilized. That is, the value of the Broadcast TWT Parameter Set field may be set to a broadcast TWT ID indicating that it is an OBSS R-TWT SP, and the combination of the values of the NDP Paging Indicator subfield and the Responder PM Mode subfield on the Control field of the TWT element including the corresponding broadcast TWT Parameter Set field(s) may indicate the presence of a broadcast TWT Parameter Set field including an OBSS R-TWT schedule within the corresponding TWT element. For example, the combination of the values of the NDP Paging Indicator subfield and the Responder PM Mode subfield may be (1, 0) or (0, 0).

Method 3: Additionally or alternatively, in one embodiment of the present disclosure, a reserved value (e.g., 5 to 7) of the Broadcast TWT recommendation field in the Broadcast TWT element may indicate that the schedule information contained in the Broadcast TWT element is information about an R-TWT SP (e.g., an OBSS R-TWT SP) scheduled by a neighboring AP.

For example, when an OBSS R-TWT SP is indicated through the value of a Broadcast TWT Recommendation field within a Broadcast TWT element, the (sub)fields within the Broadcast TWT Parameter Set field can be interpreted/defined as follows.
- For example, a (sub)field within a broadcast TWT parameter set field (e.g., a TWT request subfield, a TWT Setup Command subfield, a trigger subfield, a flow type subfield and/or an ordered subfield included within a request type field, etc.) may be replaced with a subfield related to an OBSS R-TWT schedule included within the corresponding broadcast TWT parameter set field (e.g., a subfield including information for an OBSS R-TWT schedule and/or information indicating that OBSS R-TWT schedule information exists, etc.). As another example, a reserved subfield within the broadcast TWT parameter set field may be replaced with a subfield related to an OBSS R-TWT schedule.
- Information for an OBSS R-TWT schedule may include information related to the BSS color of the OBSS AP that scheduled the OBSS R-TWT SP/schedule, information related to the bandwidth on which the OBSS R-TWT SP/schedule will operate, and/or information related to the channel on which the OBSS R-TWT schedule will operate.

Specifically, the overprotection problem for the OBSS R-TWT SP can be solved through information related to the BSS color of the OBSS AP that scheduled the OBSS R-TWT SP/schedule. For example, if a BSS STA (i.e., a STA associated with the BSS) has never received a PPDU with a specific BSS color of A, the BSS STA may not necessarily stop its TXOP before the start of the OBSS R-TWT SP corresponding to the BSS color of A. That is, here, the fact that the BSS STA has never received a PPDU with a specific BSS color of A may mean that the BSS STA is in a position that is not affected by the OBSS R-TWT schedule.

Information related to the bandwidth on which the corresponding OBSS R-TWT schedule will operate may refer to the bandwidth on which the BSS AP operates, which is influenced by the bandwidth on which the OBSS AP operates. In other words, information related to the bandwidth on which the corresponding OBSS R-TWT schedule will operate may indicate information on the bandwidth on which the BSS AP operates that overlaps with the bandwidth on which the OBSS AP operates. For example, subfield values related to information related to the bandwidth on which the corresponding OBSS R-TWT schedule will operate may indicate 20 MHz, 40 MHz, 80 MHz, 160 MHz, 320 MHz, or 640 MHz.

For example, if the bandwidth operated by the OBSS AP is 80 MHz and the bandwidth operated by the BSS AP is 160 MHz, the overlapping bandwidth area between the bandwidth operated by the BSS AP and the bandwidth operated by the OBSS AP can be indicated through the TWT bandwidth subfield. In the example described above, if the overlapping bandwidth between the bandwidth operated by the BSS AP and the bandwidth operated by the OBSS AP is 80 MHz (or 40 MHz, or 20 MHz), the TWT bandwidth subfield can be set to a value indicating 80 MHz (or 40 MHz or/and 20 MHz).

Alternatively, for example, even if the bandwidth that the OBSS AP operates on is 320 MHz and the bandwidth that the BSS AP operates on is 320 MHz, if the secondary channels have different bandwidths (e.g., 160-1 MHz or 160-2 MHz from 320 MHz within 6 GHz, or another secondary 20 MHz from 40 MHz within 2.4 GHz), the TWT bandwidth subfield may indicate only the common bandwidth excluding the non-overlapping bandwidth.

Information related to the channel on which the OBSS R-TWT schedule is to be operated may be configured in a bitmap format in which 1 bit indicates 20 MHz based on the bandwidth indicated by the TWT bandwidth. That is, the length of the TWT channel field may vary depending on the value of the TWT bandwidth subfield. For example, if the TWT channel field has a length of 1 octet and the value of the TWT bandwidth subfield is set to a value indicating 40 MHz, the TWT channel field may include information on the channel on which the R-TWT schedule is to be operated in 2 bits (e.g., 00, 01, 10, 11), and the remaining bits may be reserved.

Additionally or alternatively, when an OBSS R-TWT SP is indicated via a Broadcast TWT Recommendation field within a Broadcast TWT element, a specific element may be included on the Broadcast TWT element, and the specific element may include information/subfields related to the OBSS R-TWT schedule that the AP announces to the STA (e.g., a subfield including information for the OBSS R-TWT schedule or/and information indicating that OBSS R-TWT schedule information exists).

### Embodiment 3-2

Method 4: When the value of the limited TWT traffic information presence subfield in the broadcast TWT Info subfield included in the beacon frame according to method 1 of embodiment 3-1 is set to 1, or when the schedule information of the corresponding TWT element is indicated as an OBSS R-TWT SP through the value of the TWT recommendation field in the broadcast TWT element according to method 2 of embodiment 3-1, the AP may transmit/announce information about the corresponding OBSS R-TWT SP in the manner described below.

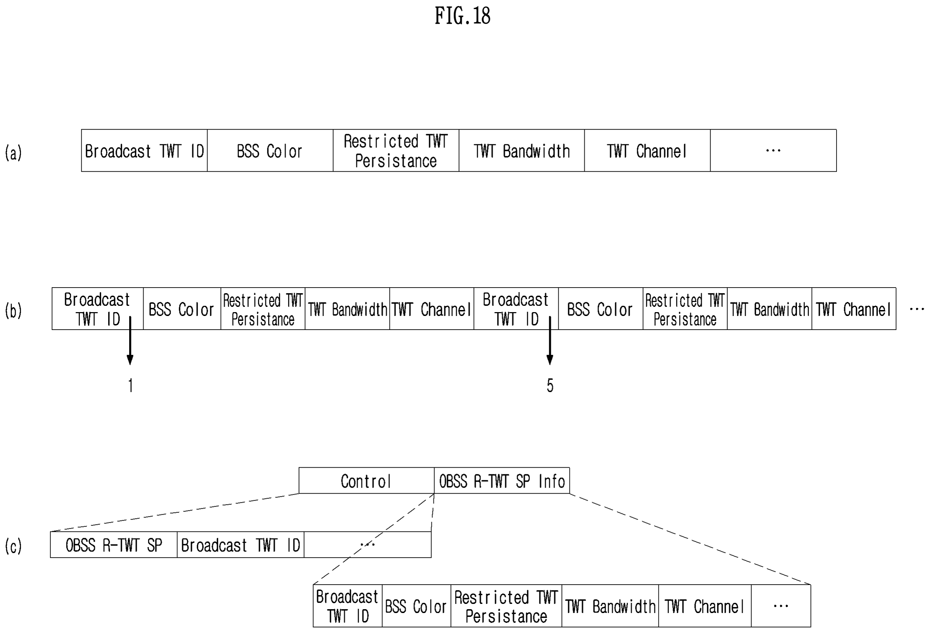

For example, as illustrated in (a) of FIG. 18, information about an OBSS R-TWT SP may include the BSS color of a neighboring AP that has allocated the OBSS R-TWT SP, actual TWT persistence of the OBSS R-TWT SP, TWT bandwidth, and TWT channel information. That is, information about the OBSS R-TWT SP illustrated in (a) of FIG. 18 may be included in the corresponding TWT element, and the AP may transmit the corresponding TWT element to the STA.

For example, if the limited TWT traffic information presence subfield value in the broadcast TWT element included in the beacon frame is set to 1, the broadcast TWT ID subfield may indicate that the information about the corresponding R-TWT SP is OBSS R-TWT SP information. The BSS color subfield may indicate the BSS color of the neighboring AP that allocated the corresponding OBSS R-TWT SP. The limited TWT persistence subfield may indicate information related to the actual persistence of the corresponding OBSS R-TWT SP. The TWT bandwidth subfield may indicate information related to the bandwidth on which the corresponding OBSS R-TWT schedule/SP will operate. The TWT channel subfield may indicate information related to the channel on which the corresponding OBSS R-TWT schedule/SP will operate.

Method 5: The method in which the AP described in Method 4 transmits/announces the OBSS R-TWT SP may be the same as the methods described below (Method 5-1 and Method 5-2).

Method 5-1: When the last broadcast parameter set subfield value included in the request type field within the broadcast TWT parameter set is set to 1, one OBSS TWT parameter set may be added after the last broadcast TWT parameter set. The added OBSS TWT parameter set may be 10 octets or less in length, which is the length of the existing broadcast TWT parameter set.

For example, if one or more broadcast TWT ID(s) correspond to an OBSS R-TWT SP, information about the OBSS R-TWT SP corresponding to each broadcast TWT ID may be listed. As an example, as illustrated in (b) of FIG. 18, an OBSS TWT parameter set may be configured by listing information about the OBSS R-TWT SP corresponding to one or more broadcast TWT ID(s). However, this is only one embodiment, and one OBSS TWT parameter set may be configured based on a broadcast TWT ID.

Method 5-2: The OBSS TWT element related to the OBSS R-TWT may be placed/located after the TWT element within the beacon frame. The OBSS TWT element can be configured as in (c) of Fig. 18, but is not limited thereto.

For example, an OBSS TWT element may include a control field and an OBSS R-TWT SP information field. The control field may include an OBSS R-TWT SP subfield and a broadcast TWT ID subfield. The OBSS R-TWT SP subfield may indicate the total number of OBSS R-TWT SPs indicated by the TWT element. The broadcast TWT ID subfield may indicate the total number of broadcast TWT IDs included in the TWT element indicating the OBSS R-TWT SP. The total number of the corresponding broadcast TWT IDs may indicate the number of times the broadcast TWT ID in the OBSS R-TWT SP information field is repeated. For example, the OBSS R-TWT SP information field may include additional information of the OBSS R-TWT SP illustrated in (a) of FIG. 18. As another example, if one or more broadcast TWT IDs correspond to OBSS R-TWT SPs, the OBSS R-TWT SP information field may be configured as in (b) of FIG. 18.

### Embodiment 3-3

If the AP configures information about the R-TWT SP and information about the OBSS R-TWT SP in the beacon frame, the AP may add information about the OBSS R-TWT SP to the beacon frame in the manner described below.

Method 6: If the last broadcast parameter set subfield value included in a specific broadcast TWT parameter set is 1, the AP may add one OBSS TWT parameter set field after the last broadcast TWT parameter set. The additional OBSS TWT parameter set may have a length that does not exceed 10 octets, which is the length of the existing broadcast TWT parameter set.

For example, if one or more broadcast TWT ID(s) correspond to an OBSS R-TWT SP, information on the OBSS R-TWT SP corresponding to each broadcast TWT ID may be listed/arranged. The sequential configuration illustrated in (a) of Fig. 18 may be configured as in (b) of Fig. 18. In this case, one parameter set may be configured with the broadcast TWT ID as the boundary.

Method 7: The OBSS TWT element described with reference to Method 5-2 may be positioned/placed after the TWT element of the beacon frame. The OBSS TWT element may be configured as in (c) of Fig. 18.

The following illustrates the operation of AP/STA related to OBSS R-TWT SP.

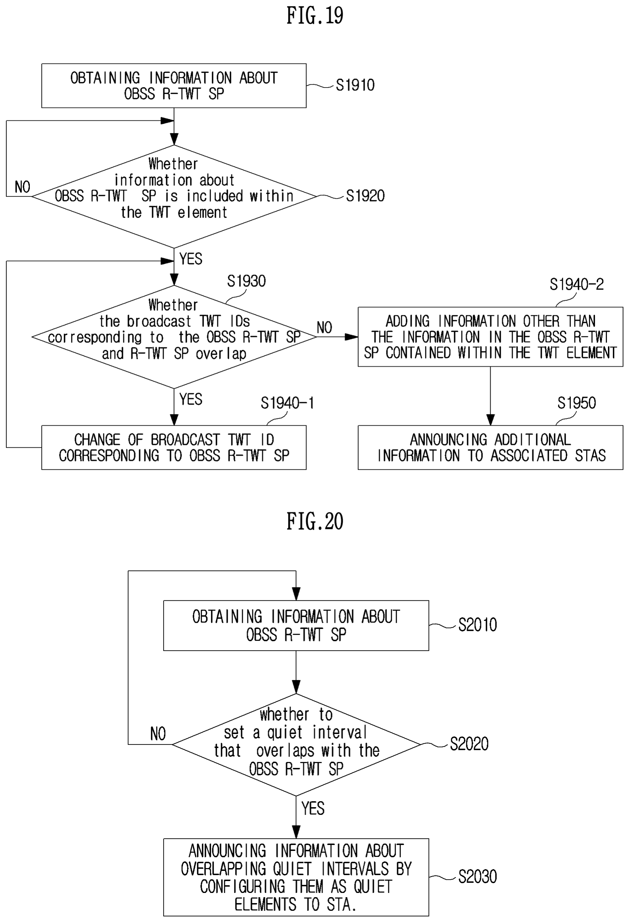

FIG. 19 illustrates an operation of an AP for announcing an OBSS R-TWT SP according to an embodiment of the present disclosure, which may be an operation applicable when supporting improved R-TWT. Specifically, the operation of FIG. 19 is an operation when an STA (e.g., STA 1-2 and STA 2-4 of FIG. 14 ) exists in an overlapping location between a BSS of an AP (i.e., an AP of a BSS to which the STA is associated) and a BSS of a neighboring AP. In FIG. 14, the APs are illustrated as not being located in each other's BSS areas, but are not limited thereto.

The AP may directly or indirectly obtain information about the OBSS R-TWT SP from a neighboring AP (S 1910). The AP may determine whether information about the OBSS R-TWT SP is included in the TWT element (S1920). If information about the OBSS R-TWT SP is included in the TWT element, the AP may perform an operation related to the information included in the TWT element. The AP may set a broadcast TWT ID that is set to correspond to the OBSS R-TWT SP and a broadcast TWT ID that is set to correspond to the R-TWT SP scheduled by the AP so as not to overlap.

For example, if a broadcast TWT ID set to correspond to an OBSS R-TWT SP and a broadcast TWT ID set to correspond to an R-TWT SP scheduled by the AP overlap with each other, the AP may change the broadcast TWT ID corresponding to the OBSS R-TWT SP to a different value (S1940-1).

As another example, if the broadcast TWT ID set to correspond to the OBSS R-TWT SP and the broadcast TWT ID set to correspond to the R-TWT SP scheduled by the AP do not overlap with each other, the AP may add additional information about the OBSS R-TWT SP (on the TWT element) according to the above-described embodiment (S1940-2). Then, the AP may announce the additional information about the OBSS R-TWT SP (S1950). Additionally, membership requests from STAs for the OBSS R-TWT SP may be prevented according to the above-described embodiment.

FIG. 20 illustrates an operation of an AP announcing an overlapping quiet interval for an OBSS R-TWT SP according to an embodiment of the present disclosure, which may be an operation applicable when supporting enhanced R-TWT. Specifically, the operation of FIG. 20 is an operation when an STA (e.g., STA 1-2 and STA 2-4 of FIG. 14 ) exists in an overlapping location between a BSS of an AP (i.e., an AP of a BSS to which the STA is associated) and a BSS of a neighboring AP. In FIG. 14 , the APs are illustrated as not being located in each other's BSS areas, but are not limited thereto.

That is, FIG. 20 relates to a method for announcing allocation information of a quiet interval to STAs associated with the BSS of the AP by allocating a quiet interval that is set to be duplicated in the OBSS R-TWT SP.

The AP may obtain information about the OBSS R-TWT SP (S2010). The AP may determine whether to set/allocate a quiet interval overlapping with the OBSS R-TWT SP (S2020). If a quiet interval overlapping with the OBSS R-TWT SP is set/allocated, the AP may include information related to the quiet interval in a quiet element and announce the quiet element to the STA(s) associated with the BSS (S2030).

As another example, if a quiet interval is not assigned that overlaps with an OBSS R-TWT SP, it may mean that the AP does not protect that OBSS R-TWT SP through the quiet interval. In this case, protection for that R-TWT SP may be supported only for STAs that support R-TWT and/or STAs that support the enhanced R-TWT SP.

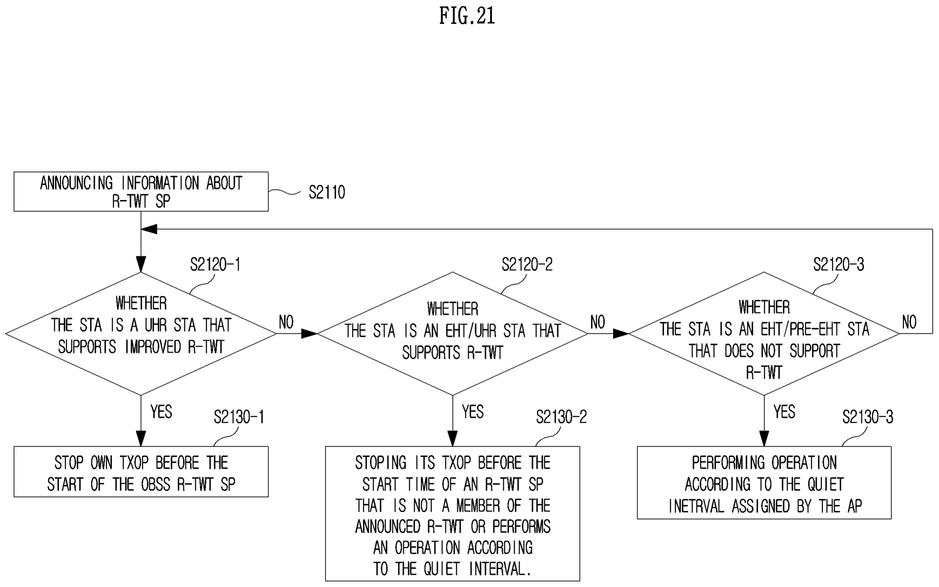

FIG. 21 is a flowchart illustrating an operation for an R-TWT announcement by an AP for each STA type according to one embodiment of the present disclosure. That is, FIG. 21 relates to a method for protecting an OBSS R-TWT SP according to capabilities supported by STAs based on information on an R-TWT SP announced by an AP.

The STA may be notified of information about the R-TWT SP from the AP of the associated BSS (S2110).

As an example of the present disclosure, if the STA is a UHR STA supporting the improved R-TWT (S2120-1), the STA may protect the OBSS R-TWT SP by stopping its TXOP before the start time of the OBSS R-TWT SP (S2130-1). Here, the STA may distinguish between the R-TWT SP scheduled by the AP and the OBSS R-TWT SP according to the above-described embodiment.

As another example of the present disclosure, if the STA is an EHT/UHR STA that supports R-TWT (i.e., does not support enhanced R-TWT) (S2120-2), the STA cannot distinguish between R-TWT SPs and OBSS R-TWT SPs. Therefore, the STA may perform a protection operation on all R-TWT SPs included in a manner notified from the AP (S2130-2).

As another example of the present disclosure, if the STA is an EHT/Pre-EHT STA that does not support R-TWT (S2130-3), the STA may not be able to recognize the information announcement of the R-TWT SP of the AP. Therefore, the STA may protect the OBSS R-TWT SP through a quiet interval that overlaps with the OBSS R-TWT SP (S2130-3).

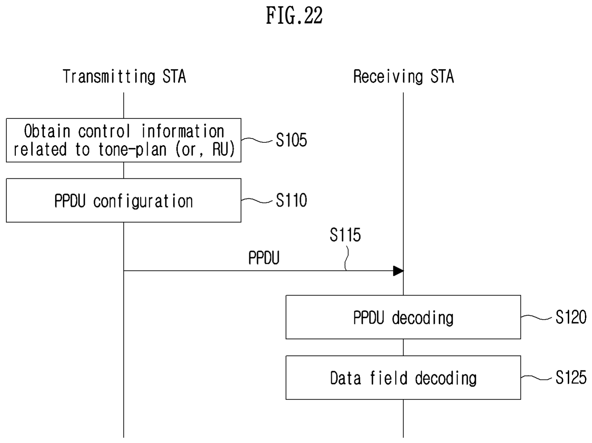

FIG. 22 is a diagram illustrating a PPDU transmission and reception procedure between a transmitting STA and a receiving STA according to an embodiment of the present disclosure. Some of the step(s) shown in FIG. 22 may be omitted depending on circumstances and/or settings. The transmitting device and the receiving STA may be APs and/or non-AP STAs.

The transmitting STA may obtain control information related to the tone plan (or RU) described above (S105). The control information related to the tone plan may include the size and location of the RU, control information related to the RU, information about the frequency band in which the RU is included, information about the STA receiving the RU, etc.

The transmitting STA may configure/generate a PPDU based on the acquired control information (S110). Configuring/generating a PPDU may mean configuring/generating each field of the PPDU. That is, the step of configuring/generating a PPDU may include a step of configuring an EHT-SIG-A/B/C field that includes control information regarding a tone plan.

That is, the step of configuring/generating a PPDU may include a step of configuring a field including control information (e.g., N bitmap) indicating the size/position of the RU and/or a step of configuring a field including an identifier (e.g., AID) of an STA receiving the RU.

Additionally, the step of configuring/generating a PPDU may include a step of generating an STF/LTF sequence to be transmitted via a specific RU. The STF/LTF sequence may be generated based on a preset STF generation sequence/LTF generation sequence.

Additionally, the step of configuring/generating a PPDU may include a step of generating a data field (i.e., an MPDU) to be transmitted via a specific RU.

The transmitting STA can transmit the configured/generated PPDU to the receiving STA (S115).

Specifically, the transmitting STA can perform at least one of CSD (cyclic shift diversity), spatial mapping, IDFT (inverse discrete Fourier transform)/IFFT (inverse fast Fourier transform) operation, GI (guard interval) insertion operation, etc.

The receiving STA may decode the PPDU and obtain control information related to the tone-plan (or RU) (S120).

Specifically, the receiving STA may decode the L-SIG and EHT-SIG of the PPDU based on the L-STF/LTF, and obtain information included in the L-SIG and EHT SIG fields. Information about various tone plans (i.e., RUs) of the present disclosure can be included in the EHT-SIG (EHT-SIG-A/B/C, etc.), and the receiving STA can obtain information about the tone plan (i.e., RU) through the EHT-SIG.

The receiving STA may decode the remaining portion of the PPDU based on the information about the acquired tone plan (i.e., RU) (S125). For example, the receiving STA can decode the STF/LTF field of the PPDU based on the information about the tone plan (i.e., RU). In addition, the receiving STA may decode the data field of the PPDU based on the information about the tone plan (i.e., RU) and obtain the MPDU included in the data field.

In addition, the receiving STA may perform a processing operation to transmit the decoded data to a higher layer (e.g., MAC layer). In addition, if the generation of a signal is instructed from the higher layer to the PHY layer in response to the data transmitted to the higher layer, the receiving STA may perform a subsequent operation.

Based on the data through the above-described operation, the receiving STA can obtain not only R-TWT scheduling information but also, in some cases, information on R-TWTs scheduled by neighboring APs. Accordingly, the receiving STA can perform a protection operation for the R-TWT SP.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, but may be applied to various WLAN or wireless communication systems other than the IEEE 802.11-based system.

## Claims

1. A method performed by a station (STA) in a wireless LAN system, the method comprising:
receiving a first frame including a first broadcast target wake time (TWT) parameter set field and a second broadcast TWT parameter set field from a first access point (AP); and
decoding the first frame,
wherein first information and a first broadcast TWT identifier (ID) related to a first restricted TWT (R-TWT) service period (SP) scheduled by the first AP are included in the first broadcast TWT parameter set, and
wherein second information and a second TWT ID related to a second R-TWT SP scheduled by the second AP are included in the second broadcast TWT parameter set.

2. The method of claim 1, wherein:
a transmission opportunity (TXOP) of the STA is terminated by the STA before a start time of the second R-TWT SP.

3. The method of claim 1, wherein:
a broadcast TWT information (info) subfield of the second broadcast TWT parameter set includes an R-TWT schedule information subfield, and
the R-TWT schedule information subfield includes information indicating that a membership request related to the second R-TWT SP by the STA is not permitted.

4. The method of claim 1, wherein:
a broadcast TWT information subfield of the second broadcast TWT parameter set includes an R-TWT schedule information subfield, and
the R-TWT schedule information subfield includes information indicating that the second information is related to the second R-TWT SP scheduled by the second AP corresponding to a nontransmitted basic service set identifier (BSSID).

5. The method of claim 1, wherein:
a value of a broadcast TWT persistence subfield included in the second broadcast parameter set field is set to a predefined minimum value.

6. The method of claim 1, wherein:
the first frame includes a first TWT element, and
a null data physical protocol data unit (NDP) paging indicator subfield and a responder power management (PM) subfield included in a control field of the first TWT element indicate that the second information is included in the first TWT element.

7. The method of claim 1, wherein:
inclusion of the second information on the first TWT element is indicated through a TWT recommendation field included in the first TWT element of the first frame.

8. The method of claim 1, wherein:
the first TWT element includes a plurality of parameter sets including the first broadcast parameter set and the second broadcast parameter set, and
the second broadcast parameter set is an last broadcast parameter set among the plurality of broadcast parameter sets.

9. The method of claim 1, wherein:
the second broadcast parameter set includes at least one of a BSS color of the second AP or a channel or bandwidth to be used by the second R-TWT SP.

10. The method of claim 1, wherein:
the first frame includes a second TWT element and a third TWT element,
the first broadcast parameter set is included in the second TWT element, and
the second broadcast parameter set is included in the third TWT element.

11. The method of claim 1, wherein:
the second R-TWT SP is protected through an overlapping quiet interval set by the first AP.

12. The method of claim 1, wherein:
the first frame includes a beacon frame.

13. The method of claim 1, wherein:
the STA is associated with a BSS of the first AP.

14. A first station (STA) operating in a wireless LAN system, the first STA comprising:
at least one transceiver; and
at least one processor connected to the at least one transceiver,
wherein the at least one processor is configured to:
receive, through the at least one transceiver, a first frame including a first broadcast target wake time (TWT) parameter set field and a second broadcast TWT parameter set field from a first access point (AP); and
decode the first frame,
wherein first information and a first broadcast TWT identifier (ID) related to a first restricted TWT (R-TWT) service period (SP) scheduled by the first AP are included in the first broadcast TWT parameter set, and
wherein second information and a second TWT ID related to a second R-TWT SP scheduled by the second AP are included in the second broadcast TWT parameter set.

15. A method performed by a first access point (AP) in a wireless LAN system, the method comprising:
receiving second information related to a second restricted target wake time (R-TWT) service period (SP) from a second AP; and
transmitting a first beacon frame including first information related to a first R-TWT SP and the second information to a first station (STA),
wherein the first beacon frame includes a first broadcast TWT parameter set field and a second broadcast TWT parameter set field,
wherein the first broadcast TWT parameter set field includes the first information and a first broadcast TWT ID, and
wherein the second broadcast TWT parameter set field includes the second information and a second broadcast TWT ID.

16. A first access point (AP) operating in a wireless LAN system, the first AP comprising:
at least one transceiver; and
at least one processor connected to the at least one transceiver,
wherein the at least one processor is configured to:
receive, through the at least one transceiver, second information related to a second restricted target wake time (R-TWT) service period (SP) from a second AP; and
transmit, through the at least one transceiver, a first beacon frame including first information related to a first R-TWT SP and the second information to a first station (STA),
wherein the first beacon frame includes a first broadcast TWT parameter set field and a second broadcast TWT parameter set field,
wherein the first broadcast TWT parameter set field includes the first information and a first broadcast TWT ID, and
wherein the second broadcast TWT parameter set field includes the second information and a second broadcast TWT ID.

17. A processing apparatus configured to control a first station (STA) in a wireless LAN system, the processing apparatus comprising:
at least one processor; and
at least one computer memory operably connected to the at least one processor and storing instructions that, based on being executed by the at least one processor, perform operations comprising:
receiving a first frame including a first broadcast target wake time (TWT) parameter set field and a second broadcast TWT parameter set field from a first access point (AP); and
decoding the first frame,
wherein first information and a first broadcast TWT identifier (ID) related to a first restricted TWT (R-TWT) service period (SP) scheduled by the first AP are included in the first broadcast TWT parameter set, and
wherein second information and a second TWT ID related to a second R-TWT SP scheduled by the second AP are included in the second broadcast TWT parameter set.

18. At least one non-transitory computer-readable medium storing at least one instruction,
wherein the at least one instruction executable by at least one processor controls a device in a wireless LAN system to:
receive a first frame including a first broadcast target wake time (TWT) parameter set field and a second broadcast TWT parameter set field from a first access point (AP); and
decode the first frame,
wherein first information and a first broadcast TWT identifier (ID) related to a first restricted TWT (R-TWT) service period (SP) scheduled by the first AP are included in the first broadcast TWT parameter set, and
wherein second information and a second TWT ID related to a second R-TWT SP scheduled by the second AP are included in the second broadcast TWT parameter set.
